# EUROPEAN PATENT APPLICATION

(11) **EP 4 794 237 A1**
(43) Date of publication of application: **19.08.2026**
(21) Application number: 24877443.2
(22) Date of filing: 27.09.2024
(51) Int. Cl.: H04L 5/00, H04L 27/26, H04W 84/12

(54) **METHOD AND DEVICE FOR TRANSMISSION OR RECEPTION BASED ON DISTRIBUTED RESOURCE UNIT TONE PLAN IN WIRELESS LAN SYSTEM**

(30) Priority: 11.10.2023 KR 20230135222
(71) Applicant: LG Electronics Inc., Yeongdeungpo-gu Seoul 07336 (KR)
(72) Inventor: PARK, Eunsung, Seoul 06772 (KR); CHUN, Jinyoung, Seoul 06772 (KR); CHOI, Jinsoo, Seoul 06772 (KR); LIM, Dongguk, Seoul 06772 (KR)
(74) Representative: Frenkel, Matthias Alexander
(86) International application number: PCT/KR2024/014735
(87) International publication number: WO 2025/079905

(57) **Abstract**

Disclosed are a method and a device for transmission or reception based on a distributed resource unit tone plan in a wireless LAN system. A method performed by a first STA in a wireless local area network (WLAN) system according to an embodiment of the present disclosure may comprise the steps of: generating a physical layer protocol data unit (PPDU); and transmitting the PPDU to a second STA within a first bandwidth, wherein a preamble field of the PPDU is transmitted to the second STA within at least one second bandwidth in the first bandwidth, and a predefined resource unit corresponding to a distributed resource unit (DRU) allocated to the PPDU and the at least one second bandwidth overlap each other.

## Description

### [TECHNICAL FIELD]

The present disclosure relates to a method and device for transmitting or receiving based on a distributed resource unit tone plan in a wireless local area network (WLAN) system.

### [BACKGROUND ART]

New technologies for improving transmission rates, increasing bandwidth, improving reliability, reducing errors, and reducing latency have been introduced for a wireless LAN (WLAN). Among WLAN technologies, an Institute of Electrical and Electronics Engineers (IEEE) 802.11 series standard may be referred to as Wi-Fi. For example, technologies recently introduced to WLAN include enhancements for Very High-Throughput (VHT) of the 802.11ac standard, and enhancements for High Efficiency (HE) of the IEEE 802.11ax standard.

In order to provide a more advanced wireless communication environment, improved technologies for Extremely High Throughput (EHT) are being discussed. For example, technologies for MIMO and multiple access point (AP) coordination that support increased bandwidth, efficient utilization of multiple bands, and increased spatial streams are being studied, and in particular, various technologies are being studied to support low latency or real-time traffic. Furthermore, new technologies are being discussed to support ultra high reliability (UHR), including improvements or extensions of EHT technologies.

### [Disclosure]

### [Technical Problem]

The technical problem of the present disclosure is to provide a method and device for transmitting or receiving based on a distributed resource unit tone plan in a wireless LAN system.

The technical problem of the present disclosure is to provide a method and apparatus for transmitting and receiving a trigger-based physical layer protocol data unit to which a distributed resource unit is applied based on a trigger frame in a wireless LAN system.

The technical objects to be achieved by the present disclosure are not limited to the above-described technical objects, and other technical objects which are not described herein will be clearly understood by those skilled in the pertinent art from the following description.

### [Technical Solution]

A method according to one embodiment of the present disclosure may include generating, by a first station (STA), a physical layer protocol data unit (PPDU); and transmitting, by the first STA to a second STA, the PPDU within a first bandwidth, and a preamble field of the PPDU may be transmitted to the second STA within at least one second bandwidth of the first bandwidth, and a predefined resource unit corresponding to a distributed resource unit (DRU) assigned to the PPDU and the at least one second bandwidth may overlap.

A method according to another embodiment of the present disclosure may include receiving, from a first station (STA) to a second STA, a physical layer protocol data unit (PPDU) within a first bandwidth; and decoding, by the second STA, the PPDU, and a preamble field of the PPDU may be received from the first STA within at least one second bandwidth of the first bandwidth, and a predefined resource unit corresponding to a distributed resource unit (DRU) assigned to the PPDU and the at least one second bandwidth may overlap.

### [Technical Effects]

According to various embodiments of the present disclosure, a method and device for transmitting or receiving based on a distributed resource unit tone plan in a wireless LAN system may be provided.

According to various embodiments of the present disclosure, a method and apparatus for transmitting and receiving a trigger-based physical layer protocol data unit to which a distributed resource unit is applied based on a trigger frame in a wireless LAN system may be provided.

According to various embodiments of the present disclosure, coverage and throughput can be improved through efficient DRU-based transmission.

Effects achievable by the present disclosure are not limited to the above-described effects, and other effects which are not described herein may be clearly understood by those skilled in the pertinent art from the following description.

### [Description of Diagrams]

Accompanying drawings included as part of detailed description for understanding the present disclosure provide embodiments of the present disclosure and describe technical features of the present disclosure with detailed description.
FIG. 1 illustrates a block configuration diagram of a wireless communication device according to an embodiment of the present disclosure.
FIG. 2 is a diagram illustrating an exemplary structure of a WLAN system to which the present disclosure may be applied.
FIG. 3 is a diagram for describing a link setup process to which the present disclosure may be applied.
FIG. 4 is a diagram for describing a backoff process to which the present disclosure may be applied.
FIG. 5 is a diagram for describing a frame transmission operation based on CSMA/CA to which the present disclosure may be applied.
FIG. 6 is a diagram for describing an example of a frame structure used in a WLAN system to which the present disclosure may be applied.
FIG. 7 is a diagram illustrating examples of PPDUs defined in the IEEE 802.11 standard to which the present disclosure may be applied.
FIGS. 8 to 10 are diagrams for explaining examples of resource units of a wireless LAN system to which the present disclosure may be applied.
FIG. 11 is a drawing illustrating examples of DRUs to which the present disclosure may be applied.
FIG. 12 is a drawing illustrating an exemplary format of a trigger frame to which the present disclosure may be applied.
FIG. 13 is a drawing for illustrating an example of a method performed by a first STA according to the present disclosure.
FIG. 14 is a drawing for illustrating an example of a method performed by a second STA according to the present disclosure.
FIG. 15 is a drawing for illustrating a PPDU transmission and reception procedure between a transmitting STA and a receiving STA according to an example of the present disclosure.

### [Best Mode]

Hereinafter, embodiments according to the present disclosure will be described in detail by referring to accompanying drawings. Detailed description to be disclosed with accompanying drawings is to describe exemplary embodiments of the present disclosure and is not to represent the only embodiment that the present disclosure may be implemented. The following detailed description includes specific details to provide complete understanding of the present disclosure. However, those skilled in the pertinent art knows that the present disclosure may be implemented without such specific details.

In some cases, known structures and devices may be omitted or may be shown in a form of a block diagram based on a core function of each structure and device in order to prevent a concept of the present disclosure from being ambiguous.

In the present disclosure, when an element is referred to as being "connected", "combined" or "linked" to another element, it may include an indirect connection relation that yet another element presents therebetween as well as a direct connection relation. In addition, in the present disclosure, a term, "include" or "have", specifies the presence of a mentioned feature, step, operation, component and/or element, but it does not exclude the presence or addition of one or more other features, stages, operations, components, elements and/or their groups.

In the present disclosure, a term such as "first", "second", etc. is used only to distinguish one element from other element and is not used to limit elements, and unless otherwise specified, it does not limit an order or importance, etc. between elements. Accordingly, within a scope of the present disclosure, a first element in an embodiment may be referred to as a second element in another embodiment and likewise, a second element in an embodiment may be referred to as a first element in another embodiment.

A term used in the present disclosure is to describe a specific embodiment, and is not to limit a claim. As used in a described and attached claim of an embodiment, a singular form is intended to include a plural form, unless the context clearly indicates otherwise. A term used in the present disclosure, "and/or", may refer to one of related enumerated items or it means that it refers to and includes any and all possible combinations of two or more of them. In addition, "/" between words in the present disclosure has the same meaning as "and/or", unless otherwise described.

Examples of the present disclosure may be applied to various wireless communication systems. For example, examples of the present disclosure may be applied to a wireless LAN system. For example, examples of the present disclosure may be applied to an IEEE 802.11a/g/n/ac/ax standards-based wireless LAN. Furthermore, examples of the present disclosure may be applied to a wireless LAN based on the newly proposed IEEE 802.11be (or EHT) standard. Examples of the present disclosure may be applied to an IEEE 802.11be Release-2 standard-based wireless LAN corresponding to an additional enhancement technology of the IEEE 802.11be Release-1 standard. Additionally, examples of the present disclosure may be applied to a next-generation standards-based wireless LAN after IEEE 802.11be. Further, examples of this disclosure may be applied to a cellular wireless communication system. For example, it may be applied to a cellular wireless communication system based on Long Term Evolution (LTE)-based technology and 5G New Radio (NR)-based technology of the 3rd Generation Partnership Project (3GPP) standard.

Hereinafter, technical features to which examples of the present disclosure may be applied will be described.

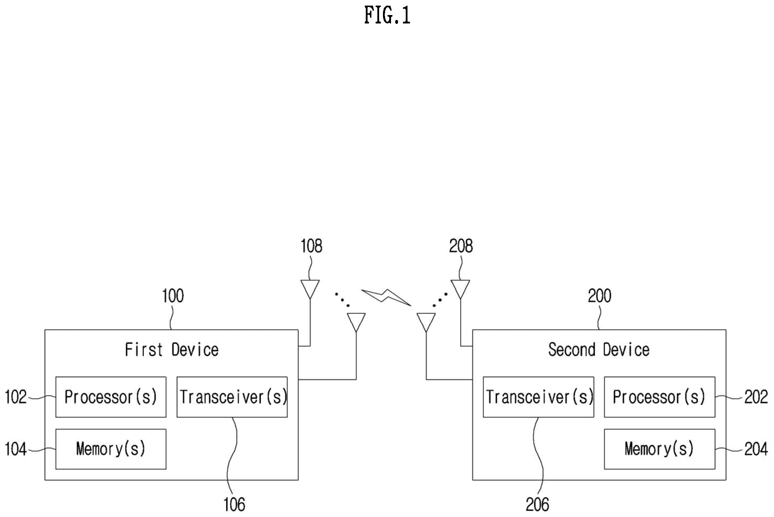

FIG. 1 illustrates a block diagram of a wireless communication device according to an embodiment of the present disclosure.

The first device 100 and the second device 200 illustrated in FIG. 1 may be replaced with various terms such as a terminal, a wireless device, a Wireless Transmit Receive Unit (WTRU), an User Equipment (UE), a Mobile Station (MS), an user terminal (UT), a Mobile Subscriber Station (MSS), a Mobile Subscriber Unit (MSU), a subscriber station (SS), an advanced mobile station (AMS), a wireless terminal (WT), or simply user, etc. In addition, the first device 100 and the second device 200 include an access point (AP), a base station (BS), a fixed station, a Node B, a base transceiver system (BTS), a network, It may be replaced with various terms such as an Artificial Intelligence (AI) system, a road side unit (RSU), a repeater, a router, a relay, and a gateway.

The devices 100 and 200 illustrated in FIG. 1 may be referred to as stations (STAs). For example, the devices 100 and 200 illustrated in FIG. 1 may be referred to by various terms such as a transmitting device, a receiving device, a transmitting STA, and a receiving STA. For example, the STAs 110 and 200 may perform an access point (AP) role or a non-AP role. That is, in the present disclosure, the STAs 110 and 200 may perform functions of an AP and/or a non-AP. When the STAs 110 and 200 perform an AP function, they may be simply referred to as APs, and when the STAs 110 and 200 perform non-AP functions, they may be simply referred to as STAs. In addition, in the present disclosure, an AP may also be indicated as an AP STA.

Referring to FIG. 1, the first device 100 and the second device 200 may transmit and receive radio signals through various wireless LAN technologies (e.g., IEEE 802.11 series). The first device 100 and the second device 200 may include an interface for a medium access control (MAC) layer and a physical layer (PHY) conforming to the IEEE 802.11 standard.

In addition, the first device 100 and the second device 200 may additionally support various communication standards (e.g., 3GPP LTE series, 5G NR series standards, etc.) technologies other than wireless LAN technology. In addition, the device of the present disclosure may be implemented in various devices such as a mobile phone, a vehicle, a personal computer, augmented reality (AR) equipment, and virtual reality (VR) equipment, etc. In addition, the STA of the present specification may support various communication services such as a voice call, a video call, data communication, autonomous-driving, machine-type communication (MTC), machine-to-machine (M2M), device-to-device (D2D), IoT (Internet-of-Things), etc.

A first device 100 may include one or more processors 102 and one or more memories 104 and may additionally include one or more transceivers 106 and/or one or more antennas 108. A processor 102 may control a memory 104 and/or a transceiver 106 and may be configured to implement description, functions, procedures, proposals, methods and/or operation flow charts disclosed in the present disclosure. For example, a processor 102 may transmit a wireless signal including first information/signal through a transceiver 106 after generating first information/signal by processing information in a memory 104. In addition, a processor 102 may receive a wireless signal including second information/signal through a transceiver 106 and then store information obtained by signal processing of second information/signal in a memory 104. A memory 104 may be connected to a processor 102 and may store a variety of information related to an operation of a processor 102. For example, a memory 104 may store a software code including instructions for performing all or part of processes controlled by a processor 102 or for performing description, functions, procedures, proposals, methods and/or operation flow charts disclosed in the present disclosure. Here, a processor 102 and a memory 104 may be part of a communication modem/circuit/chip designed to implement a wireless LAN technology (e.g., IEEE 802.11 series). A transceiver 106 may be connected to a processor 102 and may transmit and/or receive a wireless signal through one or more antennas 108. A transceiver 106 may include a transmitter and/or a receiver. A transceiver 106 may be used together with a RF (Radio Frequency) unit. In the present disclosure, a device may mean a communication modem/circuit/chip.

A second device 200 may include one or more processors 202 and one or more memories 204 and may additionally include one or more transceivers 206 and/or one or more antennas 208. A processor 202 may control a memory 204 and/or a transceiver 206 and may be configured to implement description, functions, procedures, proposals, methods and/or operation flows charts disclosed in the present disclosure. For example, a processor 202 may generate third information/signal by processing information in a memory 204, and then transmit a wireless signal including third information/signal through a transceiver 206. In addition, a processor 202 may receive a wireless signal including fourth information/signal through a transceiver 206, and then store information obtained by signal processing of fourth information/signal in a memory 204. A memory 204 may be connected to a processor 202 and may store a variety of information related to an operation of a processor 202. For example, a memory 204 may store a software code including instructions for performing all or part of processes controlled by a processor 202 or for performing description, functions, procedures, proposals, methods and/or operation flow charts disclosed in the present disclosure. Here, a processor 202 and a memory 204 may be part of a communication modem/circuit/chip designed to implement a wireless LAN technology (e.g., IEEE 802.11 series). A transceiver 206 may be connected to a processor 202 and may transmit and/or receive a wireless signal through one or more antennas 208. A transceiver 206 may include a transmitter and/or a receiver. A transceiver 206 may be used together with a RF unit. In the present disclosure, a device may mean a communication modem/circuit/chip.

Hereinafter, a hardware element of a device 100, 200 will be described in more detail. It is not limited thereto, but one or more protocol layers may be implemented by one or more processors 102, 202. For example, one or more processors 102, 202 may implement one or more layers (e.g., a functional layer such as PHY, MAC). One or more processors 102, 202 may generate one or more PDUs (Protocol Data Unit) and/or one or more SDUs (Service Data Unit) according to description, functions, procedures, proposals, methods and/or operation flow charts disclosed in the present disclosure. One or more processors 102, 202 may generate a message, control information, data or information according to description, functions, procedures, proposals, methods and/or operation flow charts disclosed in the present disclosure. One or more processors 102, 202 may generate a signal (e.g., a baseband signal) including a PDU, a SDU, a message, control information, data or information according to functions, procedures, proposals and/or methods disclosed in the present disclosure to provide it to one or more transceivers 106, 206. One or more processors 102, 202 may receive a signal (e.g., a baseband signal) from one or more transceivers 106, 206 and obtain a PDU, a SDU, a message, control information, data or information according to description, functions, procedures, proposals, methods and/or operation flow charts disclosed in the present disclosure.

One or more processors 102, 202 may be referred to as a controller, a micro controller, a micro processor or a micro computer. One or more processors 102, 202 may be implemented by a hardware, a firmware, a software, or their combination. In an example, one or more ASICs(Application Specific Integrated Circuit), one or more DSPs(Digital Signal Processor), one or more DSPDs(Digital Signal Processing Device), one or more PLDs(Programmable Logic Device) or one or more FPGAs(Field Programmable Gate Arrays) may be included in one or more processors 102, 202. Description, functions, procedures, proposals, methods and/or operation flow charts disclosed in the present disclosure may be implemented by using a firmware or a software and a firmware or a software may be implemented to include a module, a procedure, a function, etc. A firmware or a software configured to perform description, functions, procedures, proposals, methods and/or operation flow charts disclosed in the present disclosure may be included in one or more processors 102, 202 or may be stored in one or more memories 104, 204 and driven by one or more processors 102, 202. Description, functions, procedures, proposals, methods and/or operation flow charts disclosed in the present disclosure may be implemented by using a firmware or a software in a form of a code, an instruction and/or a set of instructions.

One or more memories 104, 204 may be connected to one or more processors 102, 202 and may store data, a signal, a message, information, a program, a code, an indication and/or an instruction in various forms. One or more memories 104, 204 may be configured with ROM, RAM, EPROM, a flash memory, a hard drive, a register, a cash memory, a computer readable storage medium and/or their combination. One or more memories 104, 204 may be positioned inside and/or outside one or more processors 102, 202. In addition, one or more memories 104, 204 may be connected to one or more processors 102, 202 through a variety of technologies such as a wire or wireless connection.

One or more transceivers 106, 206 may transmit user data, control information, a wireless signal/channel, etc. mentioned in methods and/or operation flow charts, etc. of the present disclosure to one or more other devices. One or more transceivers 106, 206 may receiver user data, control information, a wireless signal/channel, etc. mentioned in description, functions, procedures, proposals, methods and/or operation flow charts, etc. disclosed in the present disclosure from one or more other devices. For example, one or more transceivers 106, 206 may be connected to one or more processors 102, 202 and may transmit and receive a wireless signal. For example, one or more processors 102, 202 may control one or more transceivers 106, 206 to transmit user data, control information or a wireless signal to one or more other devices. In addition, one or more processors 102, 202 may control one or more transceivers 106, 206 to receive user data, control information or a wireless signal from one or more other devices. In addition, one or more transceivers 106, 206 may be connected to one or more antennas 108, 208 and one or more transceivers 106, 206 may be configured to transmit and receive user data, control information, a wireless signal/channel, etc. mentioned in description, functions, procedures, proposals, methods and/or operation flow charts, etc. disclosed in the present disclosure through one or more antennas 108, 208. In the present disclosure, one or more antennas may be a plurality of physical antennas or a plurality of logical antennas (e.g., an antenna port). One or more transceivers 106, 206 may convert a received wireless signal/channel, etc. into a baseband signal from a RF band signal to process received user data, control information, wireless signal/channel, etc. by using one or more processors 102, 202. One or more transceivers 106, 206 may convert user data, control information, a wireless signal/channel, etc. which are processed by using one or more processors 102, 202 from a baseband signal to a RF band signal. Therefore, one or more transceivers 106, 206 may include an (analogue) oscillator and/or a filter.

For example, one of the STAs 100 and 200 may perform an intended operation of an AP, and the other of the STAs 100 and 200 may perform an intended operation of a non-AP STA. For example, the transceivers 106 and 206 of FIG. 1 may perform a transmission and reception operation of a signal (e.g., a packet or a physical layer protocol data unit (PPDU) conforming to IEEE 802.11a/b/g/n/ac/ax/be). In addition, in the present disclosure, an operation in which various STAs generate transmission/reception signals or perform data processing or calculation in advance for transmission/reception signals may be performed by the processors 102 and 202 of FIG. 1. For example, an example of an operation of generating a transmission/reception signal or performing data processing or calculation in advance for the transmission/reception signal may include 1) determining / acquiring / configuring / calculating / decoding / encoding bit information of fields (signal (SIG), short training field (STF), long training field (LTF), Data, etc.) included in the PPDU, 2) determining / configuring / acquiring time resources or frequency resources (e.g., subcarrier resources) used for fields (SIG, STF, LTF, Data, etc.) included in the PPDU; 3) determining / configuring / acquiring a specific sequence (e.g., pilot sequence, STF/LTF sequence, extra sequence applied to SIG) used for fields (SIG, STF, LTF, Data, etc.) included in the PPDU action, 4) power control operation and/or power saving operation applied to the STA, 5) Operations related to ACK signal determination/acquisition/configuration/calculation/decoding/encoding, etc. In addition, in the following example, various information (e.g., information related to fields / subfields / control fields / parameters / power, etc.) used by various STAs to determine / acquire / configure / calculate / decode / encode transmission and reception signals may be stored in the memories 104 and 204 of FIG. 1.

Hereinafter, downlink (DL) may mean a link for communication from an AP STA to a non-AP STA, and a DL PPDU / packet / signal may be transmitted and received through the DL. In DL communication, a transmitter may be part of an AP STA, and a receiver may be part of a non-AP STA. Uplink (UL) may mean a link for communication from non-AP STAs to AP STAs, and a UL PPDU / packet / signal may be transmitted and received through the UL. In UL communication, a transmitter may be part of a non-AP STA, and a receiver may be part of an AP STA.

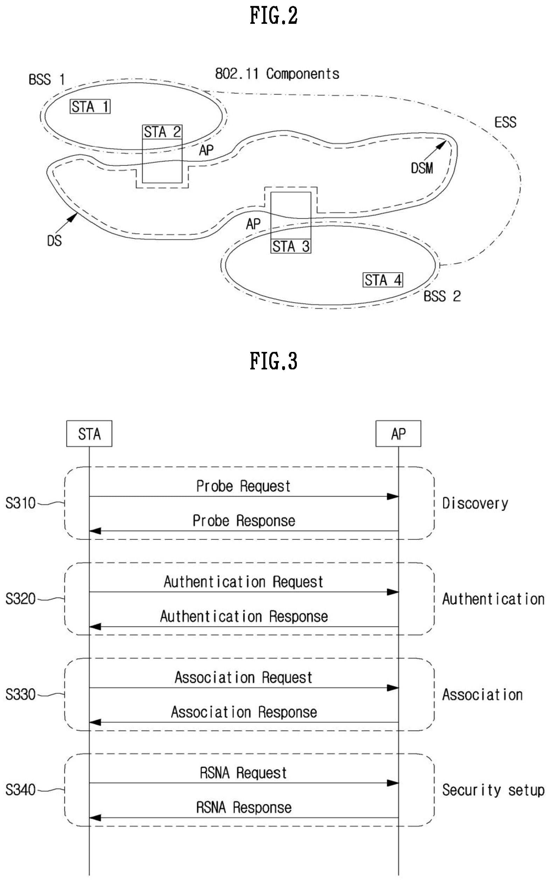

FIG. 2 is a diagram illustrating an exemplary structure of a wireless LAN system to which the present disclosure may be applied.

The structure of the wireless LAN system may consist of be composed of a plurality of components. A wireless LAN supporting STA mobility transparent to an upper layer may be provided by interaction of a plurality of components. A Basic Service Set (BSS) corresponds to a basic construction block of a wireless LAN. FIG. 2 exemplarily shows that two BSSs (BSS1 and BSS2) exist and two STAs are included as members of each BSS (STA1 and STA2 are included in BSS1, and STA3 and STA4 are included in BSS2). An ellipse representing a BSS in FIG. 2 may also be understood as representing a coverage area in which STAs included in the corresponding BSS maintain communication. This area may be referred to as a Basic Service Area (BSA). When an STA moves out of the BSA, it may not directly communicate with other STAs within the BSA.

If the DS shown in FIG. 2 is not considered, the most basic type of BSS in a wireless LAN is an independent BSS (IBSS). For example, IBSS may have a minimal form containing only two STAs. For example, assuming that other components are omitted, BSS1 containing only STA1 and STA2 or BSS2 containing only STA3 and STA4 may respectively correspond to representative examples of IBSS. This configuration is possible when STAs may communicate directly without an AP. In addition, in this type of wireless LAN, it is not configured in advance, but may be configured when a LAN is required, and this may be referred to as an ad-hoc network. Since the IBSS does not include an AP, there is no centralized management entity. That is, in IBSS, STAs are managed in a distributed manner. In IBSS, all STAs may be made up of mobile STAs, and access to the distributed system (DS) is not allowed, forming a self-contained network.

Membership of an STA in the BSS may be dynamically changed by turning on or off the STA, entering or exiting the BSS area, and the like. To become a member of the BSS, the STA may join the BSS using a synchronization process. In order to access all services of the BSS infrastructure, the STA shall be associated with the BSS. This association may be dynamically established and may include the use of a Distribution System Service (DSS).

A direct STA-to-STA distance in a wireless LAN may be limited by PHY performance. In some cases, this distance limit may be sufficient, but in some cases, communication between STAs at a longer distance may be required. A distributed system (DS) may be configured to support extended coverage.

DS means a structure in which BSSs are interconnected. Specifically, as shown in FIG. 2, a BSS may exist as an extended form of a network composed of a plurality of BSSs. DS is a logical concept and may be specified by the characteristics of Distributed System Media (DSM). In this regard, a wireless medium (WM) and a DSM may be logically separated. Each logical medium is used for a different purpose and is used by different components. These medium are not limited to being the same, nor are they limited to being different. In this way, the flexibility of the wireless LAN structure (DS structure or other network structure) may be explained in that a plurality of media are logically different. That is, the wireless LAN structure may be implemented in various ways, and the corresponding wireless LAN structure may be independently specified by the physical characteristics of each embodiment.

A DS may support a mobile device by providing seamless integration of a plurality of BSSs and providing logical services necessary to address an address to a destination. In addition, the DS may further include a component called a portal that serves as a bridge for connection between the wireless LAN and other networks (e.g., IEEE 802.X).

The AP enables access to the DS through the WM for the associated non-AP STAs, and means an entity that also has the functionality of an STA. Data movement between the BSS and the DS may be performed through the AP. For example, STA2 and STA3 shown in FIG. 2 have the functionality of STAs, and provide a function allowing the associated non-AP STAs (STA1 and STA4) to access the DS. In addition, since all APs basically correspond to STAs, all APs are addressable entities. The address used by the AP for communication on the WM and the address used by the AP for communication on the DSM are not necessarily the same. A BSS composed of an AP and one or more STAs may be referred to as an infrastructure BSS.

Data transmitted from one of the STA(s) associated with an AP to a STA address of the corresponding AP may be always received on an uncontrolled port and may be processed by an IEEE 802.1X port access entity. In addition, when a controlled port is authenticated, transmission data (or frames) may be delivered to the DS.

In addition to the structure of the DS described above, an extended service set (ESS) may be configured to provide wide coverage.

An ESS means a network in which a network having an arbitrary size and complexity is composed of DSs and BSSs. The ESS may correspond to a set of BSSs connected to one DS. However, the ESS does not include the DS. An ESS network is characterized by being seen as an IBSS in the Logical Link Control (LLC) layer. STAs included in the ESS may communicate with each other, and mobile STAs may move from one BSS to another BSS (within the same ESS) transparently to the LLC. APs included in one ESS may have the same service set identification (SSID). The SSID is distinguished from the BSSID, which is an identifier of the BSS.

The wireless LAN system does not assume anything about the relative physical locations of BSSs, and all of the following forms are possible. BSSs may partially overlap, which is a form commonly used to provide continuous coverage. In addition, BSSs may not be physically connected, and logically there is no limit on the distance between BSSs. In addition, the BSSs may be physically located in the same location, which may be used to provide redundancy. In addition, one (or more than one) IBSS or ESS networks may physically exist in the same space as one (or more than one) ESS network. When an ad-hoc network operates in a location where an ESS network exists, when physically overlapping wireless networks are configured by different organizations, or when two or more different access and security policies are required in the same location, this may correspond to the form of an ESS network in the like.

FIG. 3 is a diagram for explaining a link setup process to which the present disclosure may be applied.

In order for an STA to set up a link with respect to a network and transmit/receive data, it first discovers a network, performs authentication, establishes an association, and need to perform the authentication process for security. The link setup process may also be referred to as a session initiation process or a session setup process. In addition, the processes of discovery, authentication, association, and security setting of the link setup process may be collectively referred to as an association process.

In step S310, the STA may perform a network discovery operation. The network discovery operation may include a scanning operation of the STA. That is, in order for the STA to access the network, it needs to find a network in which it can participate. The STA shall identify a compatible network before participating in a wireless network, and the process of identifying a network existing in a specific area is called scanning.

Scanning schemes include active scanning and passive scanning. FIG. 3 exemplarily illustrates a network discovery operation including an active scanning process. In active scanning, an STA performing scanning transmits a probe request frame to discover which APs exist around it while moving channels and waits for a response thereto. A responder transmits a probe response frame as a response to the probe request frame to the STA that has transmitted the probe request frame. Here, the responder may be an STA that last transmitted a beacon frame in the BSS of the channel being scanned. In the BSS, since the AP transmits the beacon frame, the AP becomes a responder, and in the IBSS, the STAs in the IBSS rotate to transmit the beacon frame, so the responder is not constant. For example, a STA that transmits a probe request frame on channel 1 and receives a probe response frame on channel 1, may store BSS-related information included in the received probe response frame and may move to the next channel (e.g., channel 2) and perform scanning (i.e., transmission/reception of a probe request/response on channel 2) in the same manner.

Although not shown in FIG. 3, the scanning operation may be performed in a passive scanning manner. In passive scanning, a STA performing scanning waits for a beacon frame while moving channels. The beacon frame is one of the management frames defined in IEEE 802.11, and is periodically transmitted to notify the existence of a wireless network and to allow the STA performing scanning to find a wireless network and participate in the wireless network. In the BSS, the AP serves to transmit beacon frames periodically, and in the IBSS, STAs within the IBSS rotate to transmit beacon frames. When the STA performing scanning receives a beacon frame, the STA stores information for the BSS included in the beacon frame and records beacon frame information in each channel while moving to another channel. The STA receiving the beacon frame may store BSS-related information included in the received beacon frame, move to the next channel, and perform scanning in the next channel in the same way. Comparing active scanning and passive scanning, active scanning has an advantage of having less delay and less power consumption than passive scanning.

After the STA discovers the network, an authentication process may be performed in step S320. This authentication process may be referred to as a first authentication process in order to be clearly distinguished from the security setup operation of step S340 to be described later.

The authentication process includes a process in which the STA transmits an authentication request frame to the AP, and in response to this, the AP transmits an authentication response frame to the STA. An authentication frame used for authentication request/response corresponds to a management frame.

The authentication frame includes an authentication algorithm number, an authentication transaction sequence number, a status code, a challenge text, a robust security network (RSN), and a Finite Cyclic Group, etc. This corresponds to some examples of information that may be included in the authentication request/response frame, and may be replaced with other information or additional information may be further included.

The STA may transmit an authentication request frame to the AP. The AP may determine whether to allow authentication of the corresponding STA based on information included in the received authentication request frame. The AP may provide the result of the authentication process to the STA through an authentication response frame.

After the STA is successfully authenticated, an association process may be performed in step S330. The association process includes a process in which the STA transmits an association request frame to the AP, and in response, the AP transmits an association response frame to the STA.

For example, the association request frame may include information related to various capabilities, a beacon listen interval, a service set identifier (SSID), supported rates, supported channels, RSN, mobility domain, supported operating classes, Traffic Indication Map Broadcast request (TIM broadcast request), interworking service capability, etc. For example, the association response frame may include information related to various capabilities, status code, association ID (AID), supported rates, enhanced distributed channel access (EDCA) parameter set, received channel power indicator (RCPI), received signal to noise indicator (RSNI), mobility domain, timeout interval (e.g., association comeback time), overlapping BSS scan parameters, TIM broadcast response, Quality of Service (QoS) map, etc. This corresponds to some examples of information that may be included in the association request/response frame, and may be replaced with other information or additional information may be further included.

After the STA is successfully associated with the network, a security setup process may be performed in step S340. The security setup process of step S340 may be referred to as an authentication process through Robust Security Network Association (RSNA) request/response, and the authentication process of step S320 is referred to as a first authentication process, and the security setup process of step S340 may also simply be referred to as an authentication process.

The security setup process of step S340 may include, for example, a process of setting up a private key through 4-way handshaking through an Extensible Authentication Protocol over LAN (EAPOL) frame. In addition, the security setup process may be performed according to a security scheme not defined in the IEEE 802.11 standard.

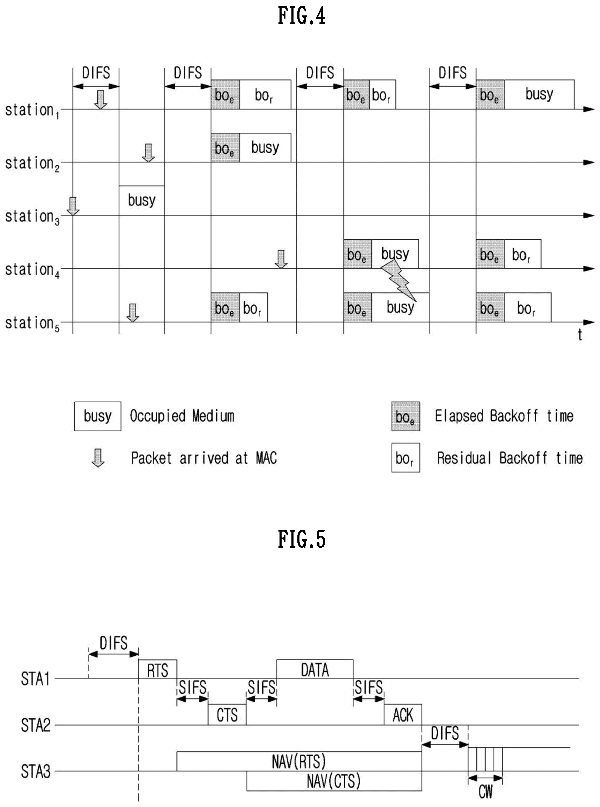

FIG. 4 is a diagram for explaining a backoff process to which the present disclosure may be applied.

In the wireless LAN system, a basic access mechanism of medium access control (MAC) is a carrier sense multiple access with collision avoidance (CSMA/CA) mechanism. The CSMA/CA mechanism is also called Distributed Coordination Function (DCF) of IEEE 802.11 MAC, and basically adopts a "listen before talk" access mechanism. According to this type of access mechanism, the AP and/or STA may perform Clear Channel Assessment (CCA) sensing a radio channel or medium during a predetermined time interval (e.g., DCF Inter-Frame Space (DIFS)), prior to starting transmission. As a result of the sensing, if it is determined that the medium is in an idle state, frame transmission is started through the corresponding medium. On the other hand, if it is detected that the medium is occupied or busy, the corresponding AP and/or STA does not start its own transmission and may set a delay period for medium access (e.g., a random backoff period) and attempt frame transmission after waiting. By applying the random backoff period, since it is expected that several STAs attempt frame transmission after waiting for different periods of time, collision may be minimized.

In addition, the IEEE 802.11 MAC protocol provides a Hybrid Coordination Function (HCF). HCF is based on the DCF and Point Coordination Function (PCF). PCF is a polling-based synchronous access method and refers to a method in which all receiving APs and/or STAs periodically poll to receive data frames. In addition, HCF has Enhanced Distributed Channel Access (EDCA) and HCF Controlled Channel Access (HCCA). EDCA is a contention-based access method for a provider to provide data frames to multiple users, and HCCA uses a non-contention-based channel access method using a polling mechanism. In addition, the HCF includes a medium access mechanism for improving QoS (Quality of Service) of the wireless LAN, and may transmit QoS data in both a Contention Period (CP) and a Contention Free Period (CFP).

Referring to FIG. 4, an operation based on a random backoff period will be described. When the occupied/busy medium changes to an idle state, several STAs may attempt to transmit data (or frames). As a method for minimizing collisions, each of STAs may respectively select a random backoff count and attempt transmission after waiting for a corresponding slot time. The random backoff count has a pseudo-random integer value and may be determined as one of values ranging from 0 to CW. Here, CW is a contention window parameter value. The CW parameter is given CWmin as an initial value, but may take a value twice as large in case of transmission failure (e.g., when an ACK for the transmitted frame is not received). When the CW parameter value reaches CWmax, data transmission may be attempted while maintaining the CWmax value until data transmission is successful, and when data transmission is successful, the CWmin value is reset. The values of CW, CWmin and CWmax are preferably set to 2ⁿ-1 (n = 0, 1, 2, ...).

When the random backoff process starts, the STA continuously monitors the medium while counting down the backoff slots according to the determined backoff count value. When the medium is monitored for occupancy, it stops counting down and waits, and resumes the rest of the countdown when the medium becomes idle.

In the example of FIG. 4, when a packet to be transmitted arrives at the MAC of STA3, STA3 may transmit the frame immediately after confirming that the medium is idle as much as DIFS. The remaining STAs monitor and wait for the medium to be occupied/busy. In the meantime, data to be transmitted may also occur in each of STA1, STA2, and STA5, and each STA waits as long as DIFS when the medium is monitored as idle, and then may perform a countdown of the backoff slot according to the random backoff count value selected by each STA. Assume that STA2 selects the smallest backoff count value and STA1 selects the largest backoff count value. That is, the case where the remaining back-off time of STA5 is shorter than the remaining back-off time of STA1 at the time when STA2 completes the back-off count and starts frame transmission is exemplified. STA1 and STA5 temporarily stop counting down and wait while STA2 occupies the medium. When the occupation of STA2 ends and the medium becomes idle again, STA1 and STA5 wait for DIFS and resume the stopped backoff count. That is, frame transmission may be started after counting down the remaining backoff slots for the remaining backoff time. Since the remaining backoff time of STA5 is shorter than that of STA1, STA5 starts frame transmission. While STA2 occupies the medium, data to be transmitted may also occur in STA4. From the standpoint of STA4, when the medium becomes idle, STA4 may wait for DIFS, and then may perform a countdown according to the random backoff count value selected by the STA4 and start transmitting frames. The example of FIG. 4 shows a case where the remaining backoff time of STA5 coincides with the random backoff count value of STA4 by chance. In this case, a collision may occur between STA4 and STA5. When a collision occurs, both STA4 and STA5 do not receive an ACK, so data transmission fails. In this case, STA4 and STA5 may double the CW value, select a random backoff count value, and perform a countdown. STA1 waits while the medium is occupied due to transmission of STA4 and STA5, waits for DIFS when the medium becomes idle, and then starts frame transmission after the remaining backoff time has elapsed.

As in the example of FIG. 4, the data frame is a frame used for transmission of data forwarded to a higher layer, and may be transmitted after a backoff performed after DIFS elapses from when the medium becomes idle. Additionally, the management frame is a frame used for exchange of management information that is not forwarded to a higher layer, and is transmitted after a backoff performed after an IFS such as DIFS or Point Coordination Function IFS (PIFS). As a subtype frames of management frame, there are a Beacon, an association request/response, a re-association request/response, a probe request/response, an authentication request/response, etc. A control frame is a frame used to control access to a medium. As a subtype frames of control frame, there are Request-To-Send (RTS), Clear-To-Send (CTS), Acknowledgement (ACK), Power Save-Poll (PS-Poll), block ACK (BlockAck), block ACK request (BlockACKReq), null data packet announcement (NDP announcement), and trigger, etc. If the control frame is not a response frame of the previous frame, it is transmitted after backoff performed after DIFS elapses, and if it is a response frame of the previous frame, it is transmitted without performing backoff after short IFS (SIFS) elapses. The type and subtype of the frame may be identified by a type field and a subtype field in a frame control (FC) field.

A Quality of Service (QoS) STA may perform the backoff that is performed after an arbitration IFS (AIFS) for an access category (AC) to which the frame belongs, that is, AIFS[i] (where i is a value determined by AC), and then may transmit the frame. Here, the frame in which AIFS[i] can be used may be a data frame, a management frame, or a control frame other than a response frame.

FIG. 5 is a diagram for explaining a frame transmission operation based on CSMA/CA to which the present disclosure may be applied.

As described above, the CSMA/CA mechanism includes virtual carrier sensing in addition to physical carrier sensing in which a STA directly senses a medium. Virtual carrier sensing is intended to compensate for problems that may occur in medium access, such as a hidden node problem. For virtual carrier sensing, the MAC of the STA may use a Network Allocation Vector (NAV). The NAV is a value indicating, to other STAs, the remaining time until the medium is available for use by an STA currently using or having the right to use the medium. Therefore, the value set as NAV corresponds to a period in which the medium is scheduled to be used by the STA transmitting the frame, and the STA receiving the NAV value is prohibited from accessing the medium during the corresponding period. For example, the NAV may be configured based on the value of the "duration" field of the MAC header of the frame.

In the example of FIG. 5, it is assumed that a STA1 intends to transmit data to a STA2, and a STA3 is in a position capable of overhearing some or all of frames transmitted and received between the STA1 and the STA2.

In order to reduce the possibility of collision of transmissions of multiple STAs in CSMA/CA based frame transmission operation, a mechanism using RTS/CTS frames may be applied. In the example of FIG. 5, while transmission of the STA1 is being performed, as a result of carrier sensing of the STA3, it may be determined that the medium is in an idle state. That is, the STA1 may correspond to a hidden node to the STA3. Alternatively, in the example of FIG. 5, it may be determined that the carrier sensing result medium of the STA3 is in an idle state while transmission of the STA2 is being performed. That is, the STA2 may correspond to a hidden node to the STA3. Through the exchange of RTS / CTS frames before performing data transmission and reception between the STA1 and the STA2, a STA outside the transmission range of one of the STA1 or the STA2, or a STA outside the carrier sensing range for transmission from the STA1 or the STA3 may not attempt to occupy the channel during data transmission and reception between the STA1 and the STA2.

Specifically, the STA1 may determine whether a channel is being used through carrier sensing. In terms of physical carrier sensing, the STA1 may determine a channel occupation idle state based on an energy level or signal correlation detected in a channel. In addition, in terms of virtual carrier sensing, the STA1 may determine a channel occupancy state using a network allocation vector (NAV) timer.

The STA1 may transmit an RTS frame to the STA2 after performing a backoff when the channel is in an idle state during DIFS. When the STA2 receives the RTS frame, the STA2 may transmit a CTS frame as a response to the RTS frame to the STA1 after SIFS.

If the STA3 cannot overhear the CTS frame from the STA2 but can overhear the RTS frame from the STA1, the STA3 may set a NAV timer for a frame transmission period (e.g., SIFS + CTS frame + SIFS + data frame + SIFS + ACK frame) that is continuously transmitted thereafter, using the duration information included in the RTS frame. Alternatively, if the STA3 can overhear a CTS frame from the STA2 although the STA3 cannot overhear an RTS frame from the STA1, the STA3 may set a NAV timer for a frame transmission period (e.g., SIFS + data frame + SIFS + ACK frame) that is continuously transmitted thereafter, using the duration information included in the CTS frame. That is, if the STA3 can overhear one or more of the RTS or CTS frames from one or more of the STA1 or the STA2, the STA3 may set the NAV accordingly. When the STA3 receives a new frame before the NAV timer expires, the STA3 may update the NAV timer using duration information included in the new frame. The STA3 does not attempt channel access until the NAV timer expires.

When the STA1 receives the CTS frame from the STA2, the STA1 may transmit the data frame to the STA2 after SIFS from the time point when the reception of the CTS frame is completed. When the STA2 successfully receives the data frame, the STA2 may transmit an ACK frame as a response to the data frame to the STA1 after SIFS. The STA3 may determine whether the channel is being used through carrier sensing when the NAV timer expires. When the STA3 determines that the channel is not used by other terminals during DIFS after expiration of the NAV timer, the STA3 may attempt channel access after a contention window (CW) according to a random backoff has passed.

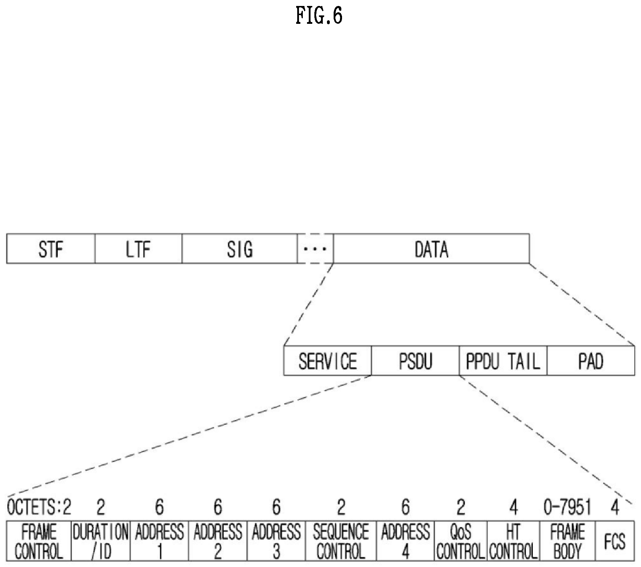

FIG. 6 is a diagram for explaining an example of a frame structure used in a WLAN system to which the present disclosure may be applied.

By means of an instruction or primitive (meaning a set of instructions or parameters) from the MAC layer, the PHY layer may prepare a MAC PDU (MPDU) to be transmitted. For example, when a command requesting transmission start of the PHY layer is received from the MAC layer, the PHY layer switches to the transmission mode and configures information (e.g., data) provided from the MAC layer in the form of a frame and transmits it. In addition, when the PHY layer detects a valid preamble of the received frame, the PHY layer monitors the header of the preamble and sends a command notifying the start of reception of the PHY layer to the MAC layer.

In this way, information transmission/reception in a wireless LAN system is performed in the form of a frame, and for this purpose, a PHY layer protocol data unit (PPDU) frame format is defined.

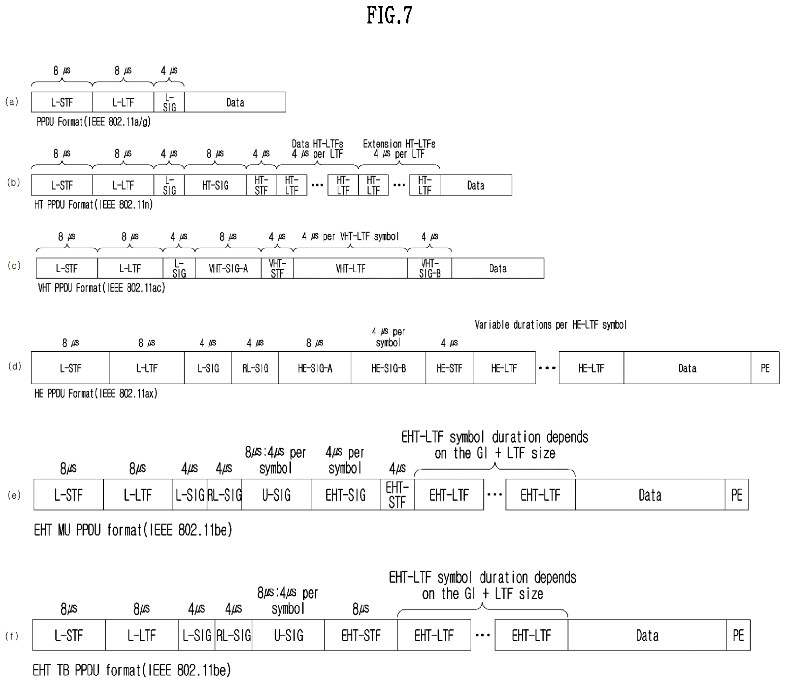

A basic PPDU may include a Short Training Field (STF), Long Training Field (LTF), SIGNAL (SIG) field, and Data (Data) field. The most basic PPDU format (e.g., non-HT (High Throughput) shown in FIG. 7) may consist of only the Legacy-STF (L-STF), Legacy-LTF (L-LTF), Legacy-SIG (L-SIG) fields, and data fields. Additionally, depending on the type of PPDU format (e.g., HT-mixed format PPDU, HT-greenfield format PPDU, VHT (Very High Throughput) PPDU, etc.), additional (or different types) of RL-SIG, U-SIG, non-legacy SIG fields, non-legacy STF, non-legacy LTF (i.e., xx-SIG, xx-STF, xx-LTF (e.g. xx is HT, VHT, HE, EHT, etc.)), etc. may be included between the L-SIG field and the data field.

The STF is a signal for signal detection, automatic gain control (AGC), diversity selection, precise time synchronization, and the like, and the LTF is a signal for channel estimation and frequency error estimation. The STF and LTF may be referred to as signals for synchronization and channel estimation of the OFDM physical layer.

The SIG field may include various information related to PPDU transmission and reception. For example, the L-SIG field consists of 24 bits and the L-SIG field may include 4-bit Rate field, 1-bit Reserved bit, 12-bit Length field, 1-bit Parity field, and 6-bit Tail field. The RATE field may include information about the modulation and coding rate of data. For example, the 12-bit Length field may include information about the length or time duration of the PPDU. For example, the value of the 12-bit Length field may be determined based on the type of PPDU. For example, for non-HT, HT, VHT, or EHT PPDU, the value of the Length field may be determined to be a multiple of 3. For example, for a HE PPDU, the value of the Length field may be determined as a multiple of 3 + 1 or a multiple of 3 + 2.

The data field may include a SERVICE field, a physical layer service data unit (PSDU), and a PPDU TAIL bit, and may also include padding bits if necessary. Some bits of the SERVICE field may be used for synchronization of the descrambler at the receiving end. The PSDU corresponds to the MAC PDU defined in the MAC layer, and may include data generated/used in the upper layer. The PPDU TAIL bit may be used to return the encoder to a 0 state. Padding bits may be used to adjust the length of a data field in a predetermined unit.

A MAC PDU is defined according to various MAC frame formats, and a basic MAC frame consists of a MAC header, a frame body, and a Frame Check Sequence (FCS). The MAC frame may consist of MAC PDUs and be transmitted/received through the PSDU of the data part of the PPDU frame format.

The MAC header includes a Frame Control field, a Duration/ID field, an Address field, and the like. The frame control field may include control information required for frame transmission/reception. The duration/ID field may be set to a time for transmitting a corresponding frame or the like. For details of the Sequence Control, QoS Control, and HT Control subfields of the MAC header, refer to the IEEE 802.11 standard document.

The null-data PPDU (NDP) format refers to a PPDU format that does not include a data field. In other words, NDP refers to a frame format that includes the PPDU preamble in a general PPDU format (i.e., L-STF, L-LTF, L-SIG fields, and additionally non-legacy SIG, non-legacy STF, non-legacy LTF if present) and does not include the remaining part (i.e., data field).

FIG. 7 is a diagram illustrating examples of PPDUs defined in the IEEE 802.11 standard to which the present disclosure may be applied.

In standards such as IEEE 802.11a/g/n/ac/ax, various types of PPDUs have been used. The basic PPDU format (IEEE 802.11a/g) includes L-LTF, L-STF, L-SIG and Data fields. The basic PPDU format may also be referred to as a non-HT PPDU format(as shown in FIG. 7(a)).

The HT PPDU format (IEEE 802.11n) additionally includes HT-SIG, HT-STF, and HT-LFT(s) fields to the basic PPDU format. The HT PPDU format shown in FIG. 7(b) may be referred to as an HT-mixed format. In addition, an HT-greenfield format PPDU may be defined, and this corresponds to a format consisting of HT-GF-STF, HT-LTF1, HT-SIG, one or more HT-LTF, and Data field, not including L-STF, L-LTF, and L-SIG (not shown).

An example of the VHT PPDU format (IEEE 802.11ac) additionally includes VHT SIG-A, VHT-STF, VHT-LTF, and VHT-SIG-B fields to the basic PPDU format(as shown in FIG. 7(c)).

An example of the HE PPDU format (IEEE 802.11ax) additionally includes Repeated L-SIG (RL-SIG), HE-SIG-A, HE-SIG-B, HE-STF, HE-LTF(s), Packet Extension (PE) field to the basic PPDU format(as shown in FIG 7(d)). Some fields may be excluded or their length may vary according to detailed examples of the HE PPDU format. For example, the HE-SIG-B field is included in the HE PPDU format for multi-user (MU), and the HE-SIG-B is not included in the HE PPDU format for single user (SU). In addition, the HE trigger-based (TB) PPDU format does not include the HE-SIG-B, and the length of the HE-STF field may vary to 8 us. The Extended Range (HE ER) SU PPDU format does not include the HE-SIG-B field, and the length of the HE-SIG-A field may vary to 16us. For example, RL-SIG may be configured the same as L-SIG. The receiving STA can know that the received PPDU is a HE PPDU or an EHT PPDU, which will be described later, based on the presence of the RL-SIG.

The EHT PPDU format may include the EHT MU (multi-user) in FIG. 7(e) and the EHT TB (trigger-based) PPDU in FIG. 7(f). The EHT PPDU format is similar to the HE PPDU format in that it includes RL-SIG followed by L-SIG, but may include U(universal)-SIG, EHT-SIG, EHT-STF, and EHT-LTF following RL-SIG.

The EHT MU PPDU in FIG. 7(e) corresponds to a PPDU carrying one or more data (or PSDU) for one or more users. That is, the EHT MU PPDU may be used for both SU transmission and MU transmission. For example, the EHT MU PPDU may correspond to a PPDU for one receiving STA or multiple receiving STAs.

The EHT TB PPDU in FIG. 7(f) omits the EHT-SIG compared to the EHT MU PPDU. An STA that receives a trigger (e.g., trigger frame or triggered response scheduling (TRS)) for UL MU transmission may perform UL transmission based on the EHT TB PPDU format.

L-STF, L-LTF, L-SIG, RL-SIG, U-SIG (Universal SIGNAL), EHT-SIG fields may be encoded and modulated so that even legacy STAs may attempt demodulation and decoding, and may be mapped based on a determined subcarrier frequency interval (e.g., 312.5 kHz). These may be referred to as pre-EHT modulated fields. Next, the EHT-STF, EHT-LTF, Data, PE fields may be encoded and modulated to be demodulated and decoded by an STA that successfully decodes the non-legacy SIG (e.g., U-SIG and/or EHT-SIG) and obtains the information included in the field, and may be mapped based on a determined subcarrier frequency interval (e.g., 78.125kHz). These may be referred to as EHT modulated fields.

Similarly, in the HE PPDU format, the L-STF, L-LTF, L-SIG, RL-SIG, HE-SIG-A, and HE-SIG-B fields may be referred to as pre-HE modulation fields, and the HE-STF, HE-LTF, Data, and PE fields may be referred to as HE modulation fields. Additionally, in the VHT PPDU format, the L-STF, L-LTF, L-SIG, and VHT-SIG-A fields may be referred to as free VHT modulation fields, and VHT STF, VHT-LTF, VHT-SIG-B, and Data fields may be referred to as VHT modulation fields.

The U-SIG included in the EHT PPDU format of FIG. 7 may be configured based on, for example, two symbols (e.g., two consecutive OFDM symbols). Each symbol (e.g., OFDM symbol) for U-SIG may have a duration of 4us, and U-SIG may have a total duration of 8us. Each symbol of U-SIG may be used to transmit 26 bits of information. For example, each symbol of U-SIG can be transmitted and received based on 52 data tones and 4 pilot tones.

U-SIG may be constructed in units of 20 MHz. For example, if an 80 MHz PPDU is constructed, the U-SIG may be duplicated. That is, the same 4 U-SIGs may be included in the 80 MHz PPDU. PPDUs exceeding 80 MHz bandwidth may include different U-SIGs.

For example, A number of uncoded bits may be transmitted through U-SIG, the first symbol of U-SIG (e.g., U-SIG-1 symbol) may transmit the first X bits of information out of the total A bits of information, and the second symbol of U-SIG (e.g., U-SIG-2 symbol) may transmit the remaining Y bit information of the total A bit information. A-bit information (e.g., 52 uncoded bits) may include a CRC field (e.g., a 4-bit long field) and a tail field (e.g., a 6-bit long field). For example, the tail field may be used to terminate the trellis of the convolutional decoder and may be set to 0.

A bit information transmitted by U-SIG may be divided into version-independent bits and version-dependent bits. For example, U-SIG may be included in a new PPDU format not shown in FIG. 7 (e.g., UHR PPDU format), and in the format of the U-SIG field included in the EHT PPDU format and the format of the U-SIG field included in the UHR PPDU format, version-independent bits may be the same, and some or all of the version-dependent bits may be different.

For example, the size of the version-independent bits of U-SIG may be fixed or variable. Version-independent bits may be assigned only to the U-SIG-1 symbol, or to both the U-SIG-1 symbol and the U-SIG-2 symbol. Version-independent bits and version-dependent bits may be called various names, such as first control bit and second control bit.

For example, the version-independent bits of U-SIG may include a 3-bit physical layer version identifier (PHY version identifier), and this information may indicate the PHY version (e.g., EHT, UHR, etc.) of the transmitted/received PPDU. The version-independent bits of U-SIG may include a 1-bit UL/DL flag field. The first value of the 1-bit UL/DL flag field is related to UL communication, and the second value of the UL/DL flag field is related to DL communication. The version-independent bits of U-SIG may include information about the length of transmission opportunity (TXOP) and information about the BSS color ID.

For example, the version-dependent bits of U-SIG may include information directly or indirectly indicating the type of PPDU (e.g., SU PPDU, MU PPDU, TB PPDU, etc.).

Information necessary for PPDU transmission and reception may be included in U-SIG. For example, U-SIG may further include information about whether information on bandwidth, information on the MCS technique applied to the non-legacy SIG (e.g., EHT-SIG or UHR-SIG, etc.), information indicating whether the DCM (dual carrier modulation) technique (e.g., a technique to achieve an effect similar to frequency diversity by reusing the same signal on two subcarriers) is applied to the non-legacy SIG, information on the number of symbols used for the non-legacy SIG, non-legacy SIG is generated across the entire band.

Some of the information required for PPDU transmission and reception may be included in U-SIG and/or non-legacy SIG (e.g., EHT-SIG or UHR-SIG, etc.). For example, information on the type of non-legacy LTF/STF (e.g., EHT-LTF/EHT-STF or UHR-LTF/UHR-STF, etc.), information on the length of the non-legacy LTF and CP (cyclic prefix) length, information on GI (guard interval) applicable to non-legacy LTF, information on preamble puncturing applicable to PPDU, information on RU (resource unit) allocation, etc. may be included only in the U-SIG, only in the non-legacy SIG, or may be indicated by a combination of information included in the U-SIG and information included in the non-legacy SIG.

Preamble puncturing may mean transmission of a PPDU in which a signal does not exist in one or more frequency units among the bandwidth of the PPDU. For example, the size of the frequency unit (or resolution of preamble puncturing) may be defined as 20MHz, 40MHz, etc. For example, preamble puncturing may be applied to a PPDU bandwidth of a predetermined size or more.

In the example of FIG. 7, non-legacy SIGs such as HE-SIG-B and EHT-SIG may include control information for the receiving STA. A non-legacy SIG may be transmitted over at least one symbol, and one symbol may have a length of 4us. Information about the number of symbols used for the EHT-SIG may be included in previous SIGs (e.g., HE-SIG-A, U-SIG, etc.).

Non-legacy SIGs such as HE-SIG-B and EHT-SIG may include common fields and user-specific fields. Common fields and user-specific fields may be coded separately.

In some cases, common fields may be omitted. For example, in a compression mode where non-OFDMA (orthogonal frequency multiple access) is applied, the common field may be omitted, and multiple STAs may receive a PPDU (e.g., a data field of the PPDU) through the same frequency band. In a non-compressed mode where OFDMA is applied, multiple users may receive a PPDU (e.g., a data field of the PPDU) through different frequency bands.

The number of user-specific fields may be determined based on the number of users. One user block field may include up to two user fields. Each user field may be associated with a MU-MIMO allocation or may be associated with a non-MU-MIMO allocation.

The common field may include a CRC bit and a Tail bit, and the length of the CRC bit may be determined to be 4 bits, and the length of the Tail bit may be determined to be 6 bits and set to 000000. The common field may include RU allocation information. RU allocation information may include information about the location of the RU to which multiple users (i.e., multiple receiving STAs) are assigned.

RU may include multiple subcarriers (or tones). RU may be used when transmitting signals to multiple STAs based on OFDMA technique. Additionally, RU may be defined even when transmitting a signal to one STA. Resources may be allocated in RU units for non-legacy STF, non-legacy LTF, and Data fields.

An RU of applicable size may be defined according to the PPDU bandwidth. RU may be defined identically or differently for the applied PPDU format (e.g., HE PPDU, EHT PPDU, UHR PPDU, etc.). For example, in the case of 80MHz PPDU, the RU placement of HE PPDU and EHT PPDU may be different. applicable RU size, number of RU, and RU location for each PPDU bandwidth, DC (direct current) subcarrier location and number, null subcarrier location and number, guard subcarrier location and number, etc. may be referred to as a tone-plan. For example, a tone-plan for high bandwidth may be defined in the form of multiple iterations of a low-bandwidth tone-plan.

RUs of various sizes may be defined as 26-tone RU, 52-tone RU, 106-tone RU, 242-tone RU, 484-tone RU, 996-tone RU,2X996-tone RU, 3X996-tone RU, etc. MRU (multiple RU) is distinguished from a plurality of individual RUs and corresponds to a group of subcarriers composed of a plurality of RUs. For example, one MRU may be defined as 52+26-tone, 106+26-tone, 484+242-tone, 996+484-tone, 996+484+242-tone, 2X996+484-tone, 3X996-tone, or 3X996+484-tone. Additionally, a plurality of RUs constituting one MRU may or may not be continuous in the frequency domain.

The specific size of the RU may be reduced or expanded. Accordingly, the specific size of each RU (i.e., the number of corresponding tones) in the present disclosure is not limiting and is illustrative. Additionally, in the present disclosure, within a predetermined bandwidth (e.g., 20, 40, 80, 160, 320 MHz, ...), the number of RUs may vary depending on the RU size.

The names of each field in the PPDU formats of FIG. 7 are exemplary, and the scope of the present disclosure is not limited by the names. In addition, examples of the present disclosure may be applied to the PPDU format illustrated in FIG. 7 as well as to a new PPDU format in which some fields are excluded and/or some fields are added based on the PPDU formats of FIG. 7.

### Resource unit

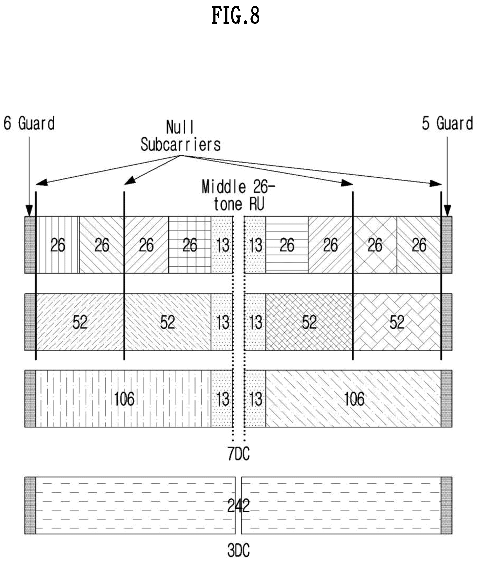

FIGs. 8 to 10 are diagrams for explaining examples of resource units of a WLAN system to which the present disclosure may be applied.

Referring to FIGS. 8 to 10, a resource unit (RU) defined in a wireless LAN system will be described. the RU may include a plurality of subcarriers (or tones). The RU may be used when transmitting signals to multiple STAs based on the OFDMA scheme. In addition, the RU may be defined even when a signal is transmitted to one STA. The RU may be used for STF, LTF, data field of the PPDU, etc.

As shown in FIGS. 8 to 10, RUs corresponding to different numbers of tones (i.e., subcarriers) are used to construct some fields of 20 MHz, 40 MHz, or 80 MHz X-PPDUs (X is HE, EHT, etc.). For example, resources may be allocated in RU units shown for the X-STF, X-LTF, and Data field.

FIG. 8 is a diagram illustrating an exemplary allocation of resource units (RUs) used on a 20 MHz band.

As shown at the top of FIG. 8, 26-units (i.e., units corresponding to 26 tones) may be allocated. 6 tones may be used as a guard band in the leftmost band of the 20 MHz band, and 5 tones may be used as a guard band in the rightmost band of the 20 MHz band. In addition, 7 DC tones are inserted in the center band, that is, the DC band, and 26-units corresponding to each of the 13 tones may exist on the left and right sides of the DC band. In addition, 26-unit, 52-unit, and 106-unit may be allocated to other bands. Each unit may be allocated for STAs or users.

The RU allocation of FIG. 8 is utilized not only in a situation for multiple users (MU) but also in a situation for a single user (SU), and in this case, it is possible to use one 242-unit as shown at the bottom of FIG. 8. In this case, three DC tones may be inserted.

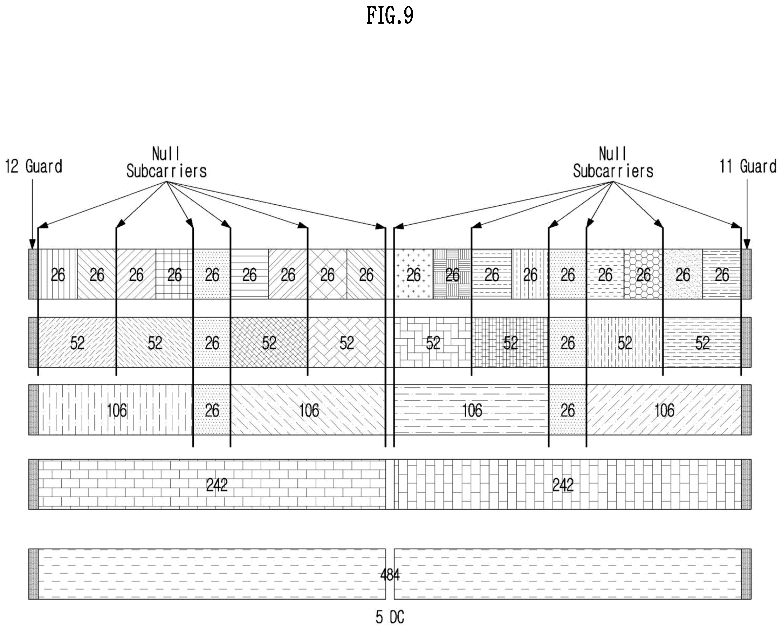

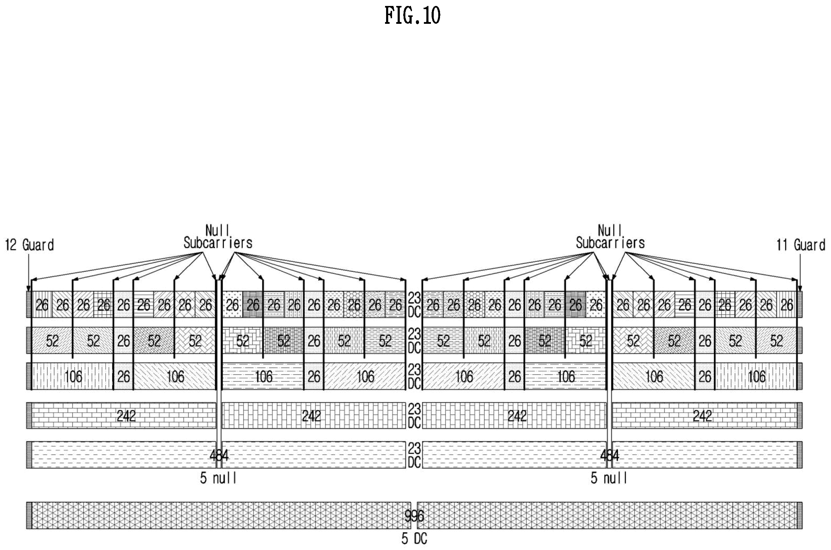

In the example of FIG. 8, RUs of various sizes, that is, 26-RU, 52-RU, 106-RU, 242-RU, etc. are exemplified, but the specific size of these RUs may be reduced or expanded. Therefore, in the present disclosure, the specific size of each RU (i.e., the number of corresponding tones) is exemplary and not restrictive. In addition, within a predetermined bandwidth (e.g., 20, 40, 80, 160, 320 MHz, ...) in the present disclosure, the number of RUs may vary according to the size of the RU. In the examples of FIG. 9 and/or FIG. 10 to be described below, the fact that the size and/or number of RUs may be varied is the same as the example of FIG. 8.

FIG. 9 is a diagram illustrating an exemplary allocation of resource units (RUs) used on a 40 MHz band.

Just as RUs of various sizes are used in the example of FIG. 8, 26-RU, 52-RU, 106-RU, 242-RU, 484-RU, and the like may be used in the example of FIG. 9 as well. In addition, 5 DC tones may be inserted at the center frequency, 12 tones may be used as a guard band in the leftmost band of the 40MHz band, and 11 tones may be used as a guard band in the rightmost band of the 40MHz band.

In addition, as shown, when used for a single user, a 484-RU may be used.

FIG. 10 is a diagram illustrating an exemplary allocation of resource units (RUs) used on an 80 MHz band.

Just as RUs of various sizes are used in the example of FIG. 8 and FIG. 9, 26-RU, 52-RU, 106-RU, 242-RU, 484-RU, 996-RU and the like may be used in the example of FIG. 10 as well. In addition, in the case of an 80 MHz PPDU, RU allocation of HE PPDUs and EHT PPDUs may be different, and the example of FIG. 10 shows an example of RU allocation for 80 MHz EHT PPDUs. The scheme that 12 tones are used as a guard band in the leftmost band of the 80 MHz band and 11 tones are used as a guard band in the rightmost band of the 80 MHz band in the example of FIG. 10 is the same in HE PPDU and EHT PPDU. Unlike HE PPDU, where 7 DC tones are inserted in the DC band and there is one 26-RU corresponding to each of the 13 tones on the left and right sides of the DC band, in the EHT PPDU, 23 DC tones are inserted into the DC band, and one 26-RU exists on the left and right sides of the DC band. Unlike the HE PPDU, where one null subcarrier exists between 242-RUs rather than the center band, there are five null subcarriers in the EHT PPDU. In the HE PPDU, one 484-RU does not include null subcarriers, but in the EHT PPDU, one 484-RU includes 5 null subcarriers.

In addition, as shown, when used for a single user, 996-RU may be used, and in this case, 5 DC tones are inserted in common with HE PPDU and EHT PPDU.

EHT PPDUs over 160 MHz may be configured with a plurality of 80 MHz subblocks in FIG. 10. The RU allocation for each 80 MHz subblock may be the same as that of the 80 MHz EHT PPDU of FIG. 10. If the 80 MHz subblock of the 160 MHz or 320 MHz EHT PPDU is not punctured and the entire 80 MHz subblock is used as part of RU or multiple RU (MRU), the 80 MHz subblock may use 996-RU of FIG. 10.

Here, the MRU corresponds to a group of subcarriers (or tones) composed of a plurality of RUs, and the plurality of RUs constituting the MRU may be RUs having the same size or RUs having different sizes. For example, a single MRU may be defined as 52+26-tone, 106+26-tone, 484+242-tone, 996+484-tone, 996+484+242-tone, 2X996+484-tone, 3X996-tone, or 3X996+484-tone. Here, the plurality of RUs constituting one MRU may correspond to small size (e.g., 26, 52, or 106) RUs or large size (e.g., 242, 484, or 996) RUs. That is, one MRU including a small size RU and a large size RU may not be configured/defined. In addition, a plurality of RUs constituting one MRU may or may not be consecutive in the frequency domain.

When an 80 MHz subblock includes RUs smaller than 996 tones, or parts of the 80 MHz subblock are punctured, the 80 MHz subblock may use RU allocation other than the 996-tone RU.

The RU of the present disclosure may be used for uplink (UL) and/or downlink (DL) communication. For example, when trigger-based UL-MU communication is performed, the STA transmitting the trigger (e.g., AP) may allocate a first RU (e.g., 26/52/106/242-RU, etc.) to a first STA and allocate a second RU (e.g., 26/52/106/242-RU, etc.) to a second STA, through trigger information (e.g., trigger frame or triggered response scheduling (TRS)). Thereafter, the first STA may transmit a first trigger-based (TB) PPDU based on the first RU, and the second STA may transmit a second TB PPDU based on the second RU. The first/second TB PPDUs may be transmitted to the AP in the same time period.

For example, when a DL MU PPDU is configured, the STA (e.g., AP) transmitting the DL MU PPDU may allocate a first RU (e.g., 26/52/106/242-RU, etc.) to the first STA and a second RU (e.g., 26/52/106/242-RU, etc.) to the second STA. That is, within a single MU PPDU, the transmitting STA (e.g., AP) may transmit X-STF (e.g., X is HE, EHT, etc.), X-LTF, and Data fields for the first STA through the first RU, and transmit X-STF, X-LTF, and Data fields for the second STA through the second RU. Information regarding the allocation of RUs may be signaled through the X-SIG (e.g., X is HE, EHT, U) field of the X-PPDU format.

### Distributed Resource Unit (DRU)

Limitations on power spectral density (PSD) may be imposed in the sub-7GHz (e.g., 6GHz) band due to regulations in various regions. For Non-AP STAs in the low power indoor (LPI) band, the PSD limitation may be -1dBm/MHz. For example, for a conventional 52-tone RU, the maximum transmit (Tx) power may be approximately 6dBm.

Also, different restrictions may apply in 2.4 GHz and 5 GHz bands. For example, in EU/China/Japan/Korea, a PSD restriction of 10 dBm/MHz may apply in 2.4 GHz band. This means that for existing 52-tone RU, the maximum Tx power can be approximately 17 dBm. If the PSD restriction in 5 GHz band can be circumvented, the transmit power can be increased. For example, for existing 52-tone RU, the maximum transmit power is 24 dBm, which is still 6 dBm below the maximum allowable effective isotropic radiated power (EIRP) of 30 dBm.

If the PSD limitation is overcome, the transmission power can be increased, thereby improving spectral efficiency or extending the range.

Considering that the PSD limitation is defined per MHz for each STA, when distributing tones of small-sized RUs over a wide bandwidth, Since the tones for each STA are non-contiguous, each tone can be transmitted at high power. An RU including such distributed tones is referred to as a distributed RU (DRU), and, to distinguish it from this, an RU including continuous tones defined in a conventional wireless LAN system (e.g., a system according to IEEE 802.11ax, 11be, etc.) may be referred to as a regular RU (RRU).

Compared to STAs transmitting conventional RRUs, STAs transmitting DRUs can use higher power. For example, a 52-tone DRU across 80 MHz has only one tone per MHz, while there are approximately 13 tones per MHz for a 52-tone RRU. Assuming a PSD limit of -1 dBm/MHz in the 6 GHz LPI band, for a 52-tone RU, the transmit power can be increased by 11 dB when using DRUs. Increasing the transmit power in this way allows for higher MCS applications and longer ranges to be supported.

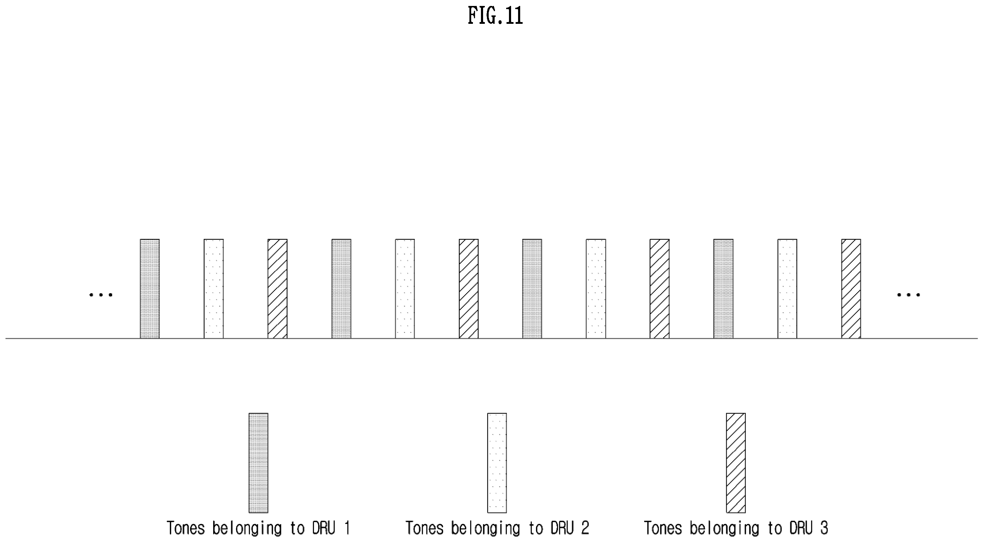

FIG. 11 is a drawing for describing examples of DRUs to which the present disclosure may be applied.

In the example of FIG. 11, STA1 transmits on DRU1, STA2 transmits on DRU2, and STA3 transmits on DRU3. Each STA may apply a transmission power boost by using the DRU. Compared to the case where an RRU of the same size is used, a higher transmission power is applied to all tones in the DRU, and thus the spectral efficiency can be greatly improved. In this way, the DRU can be particularly usefully applied in UL-OFDMA.

DRUs may also be utilized in the case of AP. In some cases, the AP may perform DL-OFDMA transmission to STA(s) using only some of DRU1, DRU2, and DRU3, in which case a transmit power boost due to the use of DRUs may be applied.

To maximize power boost, tones within a DRU can be distributed as far apart as possible. For example, a DRU including one tone per MHz may be considered an optimal example. The size of the DRU (or the number of available tones (i.e., the number of tones excluding unusable tones such as null tones, guard tones, and DC tones) included in a DRU can be defined to be the same as the size of the RRU (or the number of available tones included in a RRU). Accordingly, the impact on various technologies defined based on the existing RRU can be minimized. The table below shows examples of achievable power boost (in dB) for various DRUs distributed over different bandwidths. The examples in the table below assume the 6 GHz LPI band, and power boost can also be achieved in the 2.4 GHz and 5 GHz bands in other areas. For example, in an 80 MHz UL-OFDMA transmission by 8 users, when each user uses a 106-tone DRU, the overall performance can be improved by approximately 8.13 dB compared to when each user uses a 106-tone RRU. Accordingly, by using DRU, PSD limitations can be overcome and significant gains can be obtained.

**[Table 1]**

| | 20MHz bandwidth | 40MHz bandwidth | 80MHz bandwidth |
|---|---|---|---|
| 26-tone RU | 8.13 | 11.14 | 11.14 |
| 52-tone RU | 6.37 | 8.13 | 11.14 |
| 106-tone RU | 3.36 | 6.37 | 8.13 |
| 242-tone RU | Not applicable | 2.69 | 5.12 |
| 484-tone RU | Not applicable | Not applicable | 2.69 |

FIG. 8 is a diagram illustrating an example format of a trigger frame to which the present disclosure may be applied. The trigger frame may allocate resources for transmission of one or more TB PPDUs and request transmission of TB PPDUs. The trigger frame may also include other information required by the STA, which transmits the TB PPDU in response. The trigger frame may include common information and user information list fields in the frame body.

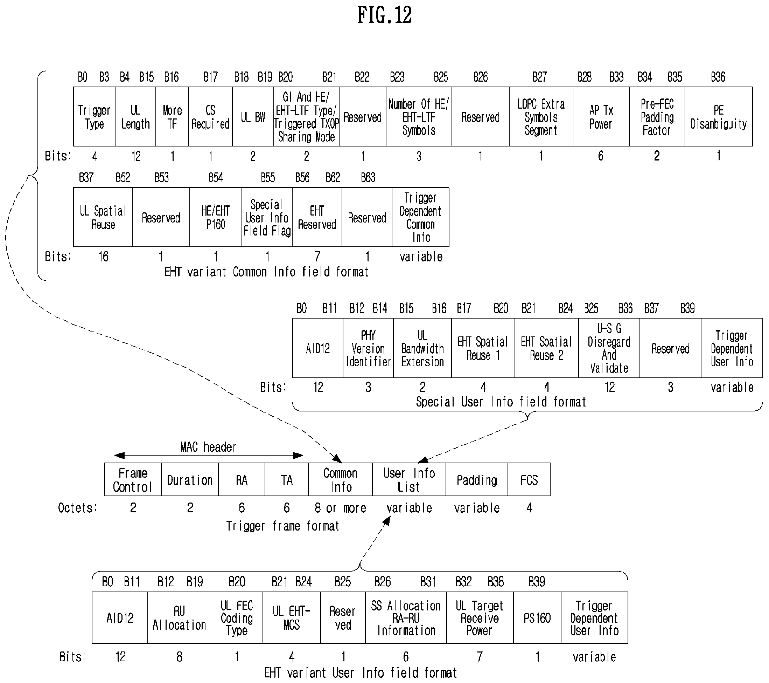

The common information field may include information that is common to one or more TB PPDU transmissions requested by a trigger frame, such as trigger type, UL length, presence of a subsequent trigger frame (e.g., More TF), whether CS (channel sensing) is required, UL BW (bandwidth), etc. Fig. 12 illustrates an example of an EHT variant common information field format.

A trigger type subfield of a 4-bit size may have a value of 0-15. Among them, 0, 1, 2, 3, 4, 5, 6 and 7, values of a trigger type subfield, are defined as corresponding to basic, BFRP (Beamforming Report Poll), MU-BAR (multi user-block acknowledgement request), MU-RTS (multi user-request to send), BSRP (Buffer Status Report Poll), GCR (groupcast with retries) MU-BAR, BQRP (Bandwidth Query Report Poll), and NFRP (NDP Feedback Report Poll), respectively, and values of 8-15 are defined as being reserved.

Among the common information, a trigger dependent common information subfield may include information that is selectively included based on a trigger type.

A special user info field may be included within the trigger frame. The special user info field does not contain user-specific information, but rather includes extended common information not provided in the common information field.

A user information list includes at least 0 user information field. FIG. 12 illustratively shows an EHT variant user information field format.

An AID12 subfield basically represents that it is a user information field for a STA having a corresponding AID. In addition, when an AID12 field has a predetermined specific value, it may be utilized for other purposes such as allocating a random access (RA)-RU or being configured in the form of a special user information field. A special user information field is a user information field that does not include user-specific information but includes extended common information not provided in a common information field. For example, a special user information field may be identified by an AID12 value of 2007, and a special user information field flag subfield within a common information field may represent whether a special user information field is included.

A RU allocation subfield may represent the size and location of a RU/a MRU. For this purpose, a RU allocation subfield may be interpreted together with the PS160 (primary/secondary 160MHz) subfield of a user information field, the UL BW subfield of a common information field, etc.

For example, as shown in Table 2 below, the mapping of B7-B1 of a RU allocation subfield may be defined together with the settings of the B0 and PS160 subfields of a RU allocation subfield. Table 2 shows an example of encoding the PS160 subfield and the RU allocation subfield of an EHT variant user information field.

**[Table 2]**

| **PS160 subfield** | **B0 of the RU Allocation subfield** | **B7-B1 of the RU Allocation subfield** | **Bandwidth (MHz)** | **RU/MRU size** | **RU/MRU index** | **PHY RU/ MRU index** |
|---|---|---|---|---|---|---|
| 0-3: | | 0-8 | 20, 40, 80, 160, or 320 | 26 | RU1 to RU9, respectively | 37×*N*+RU index |
| 80 MHz segment where the RU is located | | | | | | |
| | | 9-17 | 40, 80, 160, or 320 | | RU10 to RU18, respectively | |
| | | 18 | 80, 160, or 320 | | Reserved | |
| | | 19-36 | 80, 160, or 320 | | RU20 to RU37 respectively | |
| | | 37-40 | 20, 40, 80. 160, or 320 | 52 | RU1 to RU4, respectively | 16×*N*+RU index |
| | | 41-44 | 40, 80, 160, or 320 | | RU5 to RU8, respectively | |
| | | 45-52 | 80, 160, or 320 | | RU9 to RU16, respectively | |
| | | 53,54 | 20, 40, 80, 160, or 320 | 106 | RU1 and RU2, respectively | 8×*N*+RU index |
| | | 55, 56 | 40, 80, 160, or 320 | | RU3 and RU4, respectively | |
| | | 57-60 | 80, 160, or 320 | | RU5 to RU8, respectively | |
| | | 61 | 20, 40, 80. 160, or 320 | 242 | RU1 | 4×*N*+RU index |
| | | 62 | 40, 80, 160, or 320 | | RU2 | |
| | | 63, 64 | 80, 160, or 320 | | RU3 and RU4, respectively | |
| | | 65 | 40, 80, 160, or 320 | 484 | RU1 | 2×*N*+RU index |
| | | 66 | 80, 160, or 320 | | RU2 | |
| | | 67 | 80, 160, or 320 | 996 | RU1 | *N*+RU index |

| | | | | | | |
|---|---|---|---|---|---|---|
| 0-1: | 0 | 68 | Reserved | | | Reserved |
| 160 MHz segment where the RU is located | 1 | | 160 or 320 | 2×996 | RU1 | X1 + RU index |
| 0 | 0 | 69 | Reserved | | | Reserved |
| 0 | 1 | | | | | |
| 1 | 0 | | | | | |
| 1 | 1 | | 320 | 4×996 | RU1 | RU1 |
| 0-3: | | 70-72 | 20, 40, 80, 160, or 320 | 52+26 | MRU1 to MRU3, respectively | 12×*N*+ MRU index |
| 80 MHz segment where the RU is located | | | | | | |
| | | 73-75 | 40, 80, 160, or 320 | 52+26 | MRU4 to MRU6, respectively | |
| | | 76-81 | 80, 160, or 320 | 52+26 | MRU7 to MRU12, respectively | |
| | | 82, 83 | 20, 40, 80, 160, or 320 | 106+26 | MRU1 and MRU2, respectively | 8×*N*+ MRU index |
| | | 84, 85 | 40, 80, 160. or 320 | 106+26 | MRU3 and MRU4, respectively | |
| | | 86-89 | 80, 160, or 320 | 106+26 | MRUS to MRU8, respectively | |
| | | 90-93 | 80, 160, or 320 | 484+242 | MRU1 to MRU4, respectively | 4×*N+* MRU index |
| 0-1: | 0 | 94, 95 | 160 or 320 | 996+484 | MRU1 and MRU2, respectively | 4×X1 + MRU index |
| 160 MHz segment where the MRU is located | | | | | | |
| | 1 | | | | MRU3 and MRU4, respectively | |
| 0-1 : | 0 | 96-99 | 160 or 320 | 996+484+ 242 | MRU1 to MRU4, respectively | 8×X1 + MRU index |
| 160 MHz segment where the MRU is located | | | | | | |
| | 1 | | | | MRU5 to MRU8, respectively | |
| 0 | 0 | 100-103 | 320 | 2×996 +484 | MRU1 to MRU4, respectively | MRU index |
| 0 | 1 | | | | MRU5 and MRU6, respectively | |
| 1 | 0 | | | | MRU7 and MRU8, respectively | |
| 1 | 1 | | | | MRU9 to MRU12, respectively | |
| 0 | 0 | 104 | 320 | 3×996 | MRU1 | MRU index |
| 0 | 1 | | | | MRU2 | |
| 1 | 0 | | | | MRU3 | |
| 1 | 1 | | | | MRU4 | |
| 0 | 0 | 105, 106 | 320 | 3×996 1484 | MRU1 and MRU2, respectively | MRU index |
| 0 | 1 | | | | MRU3 and MRU4, respectively | |
| 1 | 0 | | | | MRU5 and MRU6, respectively | |
| 1 | 1 | | | | MRU7 and MRU8, respectively | |
| Any | Any | 107-127 | Any | Reserved | Reserved | Reserved |

When B0 of a RU allocation subfield is set as 0, it may represent that RU/MRU allocation is applied to a primary 80MHz channel, and when its value is set as 1, it may represent that RU allocation is applied to the secondary 80MHz channel of primary 160MHz. When B0 of a RU allocation subfield is set as 0, it may represent that RU/MRU allocation is applied to the lower 80MHz of secondary 160MHz, and when its value is set as 1, it may represent that RU allocation is applied to the upper 80MHz of secondary 160MHz.

In the trigger frame RU allocation table of Table 2, parameter N may be calculated based on the formula of N=2*X1+X0. For a bandwidth less than or equal to 80MHz, values of PS160, B0, X0 and X1 may be set as 0. For a 160MHz bandwidth and a 320MHz bandwidth, values of PS160, B0, X0 and X1 may be set as shown in Table 3. This configuration represents the absolute frequency order for primary and secondary 80MHz and 160MHz channels. The order from left to right represents the order from low frequency to high frequency. A primary 80MHz channel is indicated as P80, a secondary 80MHz channel is indicated as S80, and a secondary 160MHz channel is indicated as S160.

**[Table 3]**

| **Bandwidth (MHz)** | **Inputs** | | | **Outputs** | | |
|---|---|---|---|---|---|---|
| | **Configuration** | **PS160** | **B0** | **X0** | **X1** | **N** |
| 20/40/80 | [P80] | 0 | 0 | 0 | 0 | 0 |
| 160 | [P80 S80] | 0 | 0 | 0 | 0 | 0 |
| | | 0 | 1 | 1 | 0 | 1 |
| | [S80 P80] | 0 | 0 | 1 | 0 | 1 |
| | | 0 | 1 | 0 | 0 | 0 |
| 320 | [P80 S80 S160] | 0 | 0 | 0 | 0 | 0 |
| | | 0 | 1 | 1 | 0 | 1 |
| | | 1 | 0 | 0 | 1 | 2 |
| | | 1 | 1 | 1 | 1 | 3 |
| | [S80 P80 S160] | 0 | 0 | 1 | 0 | 1 |
| | | 0 | 1 | 0 | 0 | 0 |
| | | 1 | 0 | 0 | 1 | 2 |
| | | 1 | 1 | 1 | 1 | 3 |
| | [S160 P80 S80] | 0 | 0 | 0 | 1 | 2 |
| | | 0 | 1 | 1 | 1 | 3 |
| | | 1 | 0 | 0 | 0 | 0 |
| | | 1 | 1 | 1 | 0 | 1 |
| | [S160 S80 P80] | 0 | 0 | 1 | 1 | 3 |
| | | 0 | 1 | 0 | 1 | 2 |
| | | 1 | 0 | 0 | 0 | 0 |
| | | 1 | 1 | 1 | 0 | 1 |

### DRU tone plan based transmission and reception

As mentioned above, in order to overcome PSD limitations and improve power gain, a DRU that uses distributed tone/subcarriers can be applied instead of an RRU that uses continuous tone/subcarriers. Hereinafter, a method is described for STA to construct a preamble when transmitting TB PPDU using DRUs when triggering DRU-based transmission through a trigger frame.

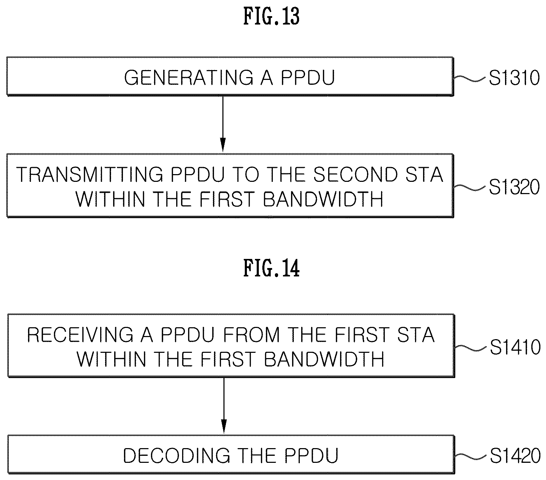

FIG. 13 is a drawing for illustrating an example of a method performed by a first STA according to the present disclosure. In FIG. 13 and FIG. 14, the first STA may be a non-AP STA and the second STA may be an AP, but is not limited thereto. Each of the first STA and the second STA may be either a non-AP STA or an AP.

The first STA may generate a physical layer protocol data unit (PPDU) (S1310).

As an example of the present disclosure, a first STA may generate a trigger-based PPDU (TB) based on a trigger frame transmitted by a second STA. In this case, the bandwidth to which the PPDU is transmitted may be indicated by the trigger frame. However, this is merely an example, and the PPDU generated by the first STA may be a non-TB PPDU.

The first STA may transmit PPDU to the second STA within the first bandwidth (S1320).

As an example of the present disclosure, the preamble field of the PPDU may be transmitted to the second STA within at least one second bandwidth of the first bandwidth.

Here, the preamble field may include at least one of a legacy (L)-short training field (STF) field, an L-long training field (LTF) field, an L-signal (SIG) field, a repeated L-SIG (RL-SIG) field, a universal (U)-SIG field, or an ultra-high reliability (UHR)-SIG field.

For example, based on the PPDU being a TB PPDU requested by the trigger frame, the preamble field may include an L-STF field, an L-LTF field, an RL-SIG field, and a U-SIG field. For another example, based on the PPDU being a non-TB PPDU, the preamble field may include an L-STF field, an L-LTF field, an RL-SIG field, a U-SIG field, and a UHR-SIG field.

As an example of the present disclosure, the size of each of at least one second bandwidth is 20 MHz, and the preamble field of the PPDU may be transmitted over the entire at least one second bandwidth. When there are many 20 MHz channels that overlap with the RRU mapped to the DRU assigned during PPDU transmission, considering the DRU mapping rule, the preamble field of the PPDU may be transmitted over the entire 20 MHz channel.

As another example of the present disclosure, the size of each of at least one second bandwidth is 20 MHz, and the preamble field of the PPDU may be transmitted in a specific second bandwidth among at least one second bandwidth. That is, in order to increase the transmission power of the preamble field and reduce the complexity of implementation, one of the at least one second bandwidths, a 20 MHz channel (i.e., a specific second bandwidth), is selected, and the preamble field may be transmitted in the selected 20 MHz channel.

As an example of the present disclosure, a specific second bandwidth may be arbitrarily selected by a first STA among at least one second bandwidth.

As another example of the present disclosure, at least one second bandwidth may be determined according to the rules set forth below.

For example, based on a primary(P) 20 MHz being included in at least one second bandwidth, a specific second bandwidth can be determined as P20 MHz. That is, the preamble field can be transmitted at P20 MHz, which overlaps with the RRU corresponding to the DRU.

For example, based on at least one second bandwidth not including P20 MHz and including a secondary (S)20 MHz, the specific second bandwidth can be determined as S20 MHz. That is, the preamble field can be transmitted at S20 MHz, which overlaps with the RRU corresponding to the DRU.

For example, based on P20 MHz and S20 MHz being not included in at least one second bandwidth and a first 20 MHz of S40 MHz being included in the at least one second bandwidth, then a specific second bandwidth may be a first 20 MHz. That is, the preamble field may be transmitted at a first 20 MHz that overlaps with the RRU corresponding to the DRU. Here, the first 20 MHz may be the 20 MHz having the lowest or highest bandwidth among the two 20 MHzs included in S40 MHz.

For example, based on P20 MHz, S20 MHz and S40 MHz being not included in at least one second bandwidth, and a second 20 MHz of S80 MHz being included in the at least one second bandwidth, then a specific second bandwidth may be a second 20 MHz. That is, the preamble field may be transmitted in a second 20 MHz that overlaps with the RRU corresponding to the DRU. Here, the second 20 MHz may be the 20 MHz having the lowest or highest bandwidth among the four 20 MHzs included in S80 MHz.

For example, based on P20 MHz, S20 MHz, S40 MHz and S80 MHz being not included in at least one second bandwidth and a third 20 MHz of S160 MHz being included in the at least one second bandwidth, then a specific second bandwidth may be a third 20 MHz. That is, the preamble field may be transmitted at a third 20 MHz that overlaps with the RRU corresponding to the DRU. Here, the third 20 MHz may be the lowest or highest bandwidth of the eight 20 MHzs included in S160 MHz.

As described above, the size of at least one second bandwidth may be 20 MHz, but is not limited thereto. The size of at least one second bandwidth may be determined to be various values such as 40 MHz.

Additionally, the UHR-STF field and the UHR-LTF field of the PPDU may each be transmitted based on a subcarrier that overlaps with the DRU. However, this is merely one embodiment, and the UHR-STF field and the UHR-LTF field of the PPDU may also be transmitted in at least one second bandwidth.

The method described in the example of FIG. 13 can be performed by the first device (100) of FIG. 1. For example, one or more processors (102) of the first device (100) of FIG. 1 can generate a PPDU. One or more processors (102) can transmit the PPDU to the second STA through one or more transceivers (106) within the first bandwidth.

Furthermore, one or more memories (104) of the first device (100) may store instructions for performing the method described in the example of FIG. 13 or the examples described below when executed by one or more processors (102).

FIG. 14 is a drawing for illustrating an example of a method performed by a second STA according to the present disclosure.

The second STA may receive a PPDU from the first STA within the first bandwidth (S1410).

For example, the second STA may receive a TB PPDU from the first STA based on a trigger frame (i.e., a trigger frame transmitted by the second STA to the first STA). In this case, the first bandwidth may be indicated by the trigger frame. As another example, the second STA may receive a non-TB PPDU from the first STA.

The second STA may decode the PPDU (S1420).

Here, the preamble field of the PPDU is received within at least one second bandwidth of the first bandwidth, and at least one second bandwidth may overlap with a predefined resource unit corresponding to the DRU assigned to the PPDU. Thus, the second STA can decode the preamble field transmitted within the second bandwidth. The configuration of at least one second bandwidth in which the preamble field is transmitted is described in FIG. 13, so a redundant description will be omitted.

The method described in the example of FIG. 14 can be performed by the second device (200) of FIG. 1. For example, one or more processors (202) of the second device (200) of FIG. 1 can receive a PPDU from the first STA through one or more transceivers (206). One or more processors (202) can decode the PPDU.

Furthermore, one or more memories (204) of the second device (200) may store instructions for performing the method described in the example of FIG. 14 or the examples described below when executed by one or more processors (202).

Hereinafter, a method for configuring the preamble of a TB PPDU with DRU applied is described in detail.

As an example of the present disclosure, a UHR trigger frame based on the trigger frame illustrated in FIG. 12 may include a UHR variant common information field, a UHR variant special user information field, a UHR variant user information field, etc. Additionally, the UHR variant user information field may include an RU allocation subfield, and the RU/MRU used for each STA may be indicated through the RU allocation subfield.

As an example of the present disclosure, the same RU allocation subfield as when RRU is applied may be used when DRU is applied. When DRU application is indicated (by a trigger frame, etc.), the STA can identify that it is a DRU-based transmission using a defined mapping rule and a DRU tone plan. That is, even when DRU is applied, the RU allocation subfield does not need to be changed or additionally defined, and a field to indicate DRU application may be included on the trigger frame.

In a basic wireless LAN system (e.g., an EHT-based system), when a specific STA is assigned to a specific RU/MRU and transmits a TB PPDU, the legacy preamble, RL-SIG field, and U-SIG field of the TB PPDU transmitted by the specific STA are transmitted on a 20 MHz channel that overlaps with the assigned RU/MRU, and the EHT-STF field and EHT-LTF field are transmitted on a subcarrier that overlaps with the assigned RU/MRU.

The structure of the TB PPDU solicited by the trigger frame in a next-generation wireless LAN system (e.g., a UHR-based system) may be similar to the structure of the TB PPDU in a basic wireless LAN system.

For example, a TB PPDU requested by a trigger frame in a next-generation wireless LAN system may include a legacy preamble (e.g., L-STF field, L-LTF field, L-SIG field), RL-SIG field, U-SIG field, UHR-SIG field, UHR-STF field, UHR-LTF field, and a Data part. However, this is merely one example, and some fields within the TB PPDU may not be used and certain fields may be added.

In addition, when a specific STA is assigned to a specific RRU and transmits a TB PPDU, the legacy preamble, RL-SIG field, U-SIG field and UHR-SIG field of the TB PPDU transmitted by the STA may be transmitted on a 20 MHz channel that overlaps with the assigned RRU, and the UHR-STF field and UHR-LTF field may be transmitted on a subcarrier that overlaps with the assigned RRU.

Hereinafter, the preamble configuration method of the PPDU transmitted by a specific STA when that STA is assigned to a DRU and transmits a TB PPDU is described.

### Embodiment 1

Embodiment 1 relates to the configuration of the legacy preamble, RL-SIG field, U-SIG field and UHR-SIG field among the preambles of the TB PPDU transmitted by a specific STA when the STA is assigned to a DRU and transmits a TB PPDU.

### Option 1

As an example of the present disclosure, similar to the case where a TB PPDU is assigned to an RRU and transmitted, the legacy preamble, RL-SIG field, U-SIG field and UHR-SIG field of the TB PPDU preamble may be transmitted in a 20 MHz channel that overlaps with the assigned DRU.

Here, the OBSS (overlapping basic service set) STA may recognize that a specific signal is being transmitted on the 20 MHz channel and may not start transmitting PPDU accordingly. Accordingly, if Option 1 is applied, interference from the OBSS STA may be minimized.

### Option 2

As an example of the present disclosure, legacy preamble, RL-SIG field, U-SIG field and UHR-SIG field among the preambles of the TB PPDU may be transmitted only within some 20 MHz channels where the DRU is transmitted.

In the case of Option 1, the transmission power of the legacy preamble, RL-SIG field, U-SIG field, and UHR-SIG field among the preambles of the TB PPDU may be lower than that of the data part transmitted using only the DRU, and accordingly, sufficient transmission range may not be guaranteed for the preamble fields. Therefore, in order to increase the transmission power and transmission range for the preamble fields, the legacy preamble, RL-SIG field, U-SIG field, and UHR-SIG field among the preambles of the TB PPDU may be transmitted only at a specific 20 MHz. Through this, an OBSS STA located far from the STA receiving the TB PPDU can recognize the transmission of the PPDU.

For example, when a DRU is assigned to transmit a TB PPDU, the legacy preamble, RL-SIG field, U-SIG field and UHR-SIG field among the preambles of the TB PPDU may be transmitted on a 20 MHz channel as follows.
- If the allocated DRU overlaps with P(primary)20 MHz, the legacy preamble, RL-SIG field, U-SIG field and UHR-SIG field among the preambles of the TB PPDU can be transmitted only at P20 MHz.
- If the allocated DRU does not overlap with P20 MHz but overlaps with S(secondary) 20 MHz, the legacy preamble, RL-SIG field, U-SIG field and UHR-SIG field among the preambles of the TB PPDU can be transmitted only at S20 MHz.
- If the allocated DRU does not overlap with P20 MHz and S20 MHz but overlaps with a specific 20 MHz of S40 MHz, the legacy preamble, RL-SIG field, U-SIG field and UHR-SIG field among the preambles of the TB PPDU may be transmitted only at a specific 20 MHz of S40 MHz (e.g., 20 MHz corresponding to P20 MHz or the lowest or highest 20 MHz in terms of frequency).
- If the allocated DRU does not overlap with P20 MHz, S20 MHz and S40 MHz but overlaps with a specific 20 MHz of S80 MHz, the legacy preamble, RL-SIG field, U-SIG field and UHR-SIG field among the preambles of the TB PPDU may be transmitted only at a specific 20 MHz of S80 MHz (e.g., 20 MHz corresponding to P20 MHz or the lowest or highest 20 MHz in terms of frequency).
- If the allocated DRU does not overlap with P20 MHz, S20 MHz, S40 MHz and S80 MHz but overlaps with a specific 20 MHz of S160 MHz, the legacy preamble, RL-SIG field, U-SIG field and UHR-SIG field among the preambles of the TB PPDU may be transmitted only at a specific 20 MHz of S160 MHz (e.g., 20 MHz corresponding to P20 MHz or the lowest or highest 20 MHz in terms of frequency).

Additionally or alternatively, regardless of the rules described above, any 20 MHz of the 20 MHz channels overlapping with the allocated DRU may be selected, and the legacy preamble, RL-SIG field, U-SIG field and UHR-SIG field of the preamble of the TB PPDU may be transmitted in the selected 20 MHz. When the above method is applied, if there are many STAs transmitting TB PPDU, the 20 MHz overlapping with each other may be reduced, which may be easier from the perspective of AP decoding.

### Option 3

As an example of the present disclosure, considering the DRU mapping rule, the legacy preamble, RL-SIG field, U-SIG field and UHR-SIG field among the preambles of the TB PPDU may be transmitted in all 20 MHz channels that overlap with the RRU mapped to the DRU assigned during TB PPDU transmission.

For example, when transmitting TB PPDU in an 80 MHz bandwidth, a 106-ton DRU mapping rule can be assumed as follows.
- 106 dRU-1 : 106 rRU-1, 106 dRU-2 : 106 rRU-5, 106 dRU-3 : 106 rRU-3, 106 dRU-4 : 106 rRU-7, 106 dRU-5 : 106 rRU-2, 106 dRU-6 : 106 rRU-6, 106 dRU-7 : 106 rRU-4, 106 dRU-8 : 106 rRU-8

Here, 106 DRU-x means the x-th 106 DRU, and 106 RRU-y means the y-th 106 RRU. Also, in the case of RRU, it is assumed that indices are assigned in order starting from the RRU located at the lowest frequency.

Additionally, the subcarriers of each 106 DRU can be evenly distributed within the 80 MHz channel. Therefore, when Option 1 is applied to transmit the legacy preamble, RL-SIG field, U-SIG field, and UHR-SIG field among the preambles of the TB PPDU in the 20 MHz channel overlapping with the 106 DRU, the fields described above can be transmitted across the entire 80 MHz channel.

However, in the case of Option 3, since there is only one 20 MHz channel that overlaps with the 106 RRU mapped to each 106 DRU, the legacy preamble, RL-SIG field, U-SIG field, and UHR-SIG field among the preambles of the TB PPDU can be transmitted only in one 20 MHz channel. Option 3 has the advantage of being simpler to implement than other options and can increase the transmission power of the fields described above.

Additionally, considering the DRU mapping rule, if there is one or more 20 MHz channels that overlap with the RRU mapped to the DRU assigned when transmitting the TB PPDU, the legacy preamble, RL-SIG field, U-SIG field and UHR-SIG field among the preambles of the TB PPDU may be transmitted in all of the one or more 20 MHz channels.

However, this is merely one embodiment, and one of the one or more 20 MHz channels may be selected, and in the selected 20 MHz channel, the legacy preamble, RL-SIG field, U-SIG field and UHR-SIG field among the preambles of the TB PPDU may be transmitted.

For example, the rules described below may be applied, or one or more of the above 20 MHz channels may be arbitrarily selected.
- If the RRU mapped to the allocated DRU overlaps with P20 MHz, the legacy preamble, RL-SIG field, U-SIG field and UHR-SIG field among the preambles of the TB PPDU can be transmitted only at P20 MHz.
- If the RRU mapped to the allocated DRU does not overlap with P20 MHz but overlaps with S20 MHz, the legacy preamble, RL-SIG field, U-SIG field and UHR-SIG field among the preambles of the TB PPDU can be transmitted only at S20 MHz.
- If the RRU mapped to the allocated DRU does not overlap with P20 MHz and S20 MHz but overlaps with a specific 20 MHz of S40 MHz, the legacy preamble, RL-SIG field, U-SIG field and UHR-SIG field among the preambles of the TB PPDU may be transmitted only at a specific 20 MHz of S40 MHz (e.g., 20 MHz corresponding to P20 MHz or the lowest or highest 20 MHz in terms of frequency).
- If the RRU mapped to the allocated DRU does not overlap with P20 MHz, S20 MHz and S40 MHz but overlaps with a specific 20 MHz of S80 MHz, the legacy preamble, RL-SIG field, U-SIG field and UHR-SIG field among the preambles of the TB PPDU may be transmitted only at a specific 20 MHz of S80 MHz (e.g., 20 MHz corresponding to P20 MHz or the lowest or highest 20 MHz in terms of frequency).
- If the RRU mapped to the allocated DRU does not overlap with P20 MHz, S20 MHz, S40 MHz and S80 MHz but overlaps with a specific 20 MHz of S160 MHz, the legacy preamble, RL-SIG field, U-SIG field and UHR-SIG field among the preambles of the TB PPDU may be transmitted only at a specific 20 MHz of S160 MHz (e.g., 20 MHz corresponding to P20 MHz or the lowest or highest 20 MHz in terms of frequency).

### Embodiment 2

Embodiment 2 relates to the configuration of the UHR-STF field of the TB PPDU transmitted by a specific STA when that STA is assigned to a DRU and transmits the TB PPDU.

As an example of the present disclosure, the UHR-STF field of the TB PPDU may be transmitted in a subcarrier overlapping the allocated DRU, which may have low implementation complexity.

Additionally or alternatively, the configuration of the UHR-STF field may be the same as the configuration of the legacy preamble, RL-SIG field, U-SIG field, and UHR-SIG field. Since there may not be many overlapping subcarriers between the UHR-STF field and the allocated DRU, automatic gain control (AGC) may not be performed properly. Therefore, it may be desirable to transmit the UHR-STF field in 20 MHz channel units from the perspective of peak-to-average power ratio (PAPR).

### Embodiment 3

Embodiment 3 relates to the configuration of the UHR-LTF field of the TB PPDU transmitted by a specific STA when that STA is assigned to a DRU and transmits the TB PPDU.

As an example of the present disclosure, the UHR-LTF field of the TB PPDU may be transmitted in a subcarrier overlapping the allocated DRU, which may have low implementation complexity. Also, for the AP receiving the TB PPDU, the UHR-LTF field may only be required for channel measurement of the subcarrier where the DRU is transmitted. Thus, transmission of the UHR-LTF field in 20 MHz increments may not be necessary.

In addition, since the STA and UHR-LTF signals assigned to different DRUs are not mixed at the receiver (i.e., AP), the complexity of the measurement operation of the AP can be reduced according to the UHR-LTF configuration described above.

As another example, the configuration of the UHR-LTF field of the TB PPDU transmitted by the STA may be the same as the configuration of the legacy preamble, RL-SIG field, U-SIG field, and UHR-SIG field. Transmitting the UHR-LTF field in 20 MHz channel units may be desirable from a PAPR perspective.

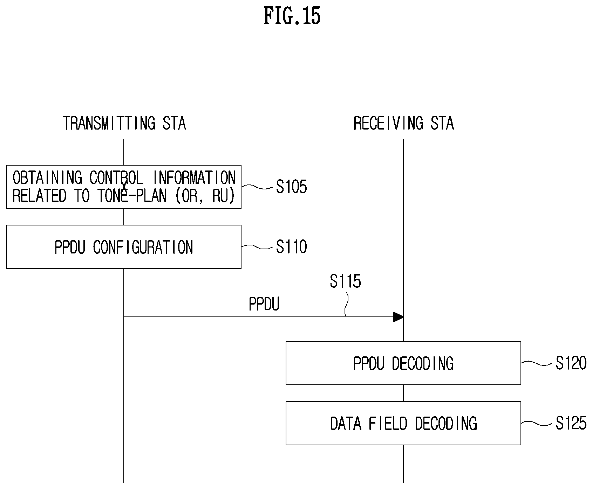

FIG. 15 is a diagram illustrating a PPDU transmission and reception procedure between a transmitting STA and a receiving STA according to one embodiment of the present disclosure. Some of the steps shown in FIG. 15 may be omitted depending on circumstances and/or settings. The transmitting device and the receiving STA may be APs and/or non-AP STAs.

The transmitting STA may acquire control information related to the above-described tone plan (or RU/DRU) (S105). The control information related to the tone plan may include information for the size and position of the RU, control information related to the RU, information for the frequency band in which the RU is included, and information for the STA receiving the RU.

The transmitting STA may construct/generate a PPDU based on the acquired control information (S110). Constructing/generating a PPDU may mean constructing/generating each field of the PPDU. That is, the step of constructing/generating the PPDU may include a step of constructing/configuring an EHT-SIG-A/B/C field including the control information for the tone plan.

That is, the step of constructing/generating the PPDU may include a step of constructing/configuring a field including control information (e.g., an N bitmap) indicating the size/position of the RU and/or a step of constructing/configuring a field including an identifier (e.g., AID) of the STA receiving the RU.

Additionally, the step of constructing/generating the PPDU may include a step of generating an STF/LTF sequence transmitted through a specific RU. The STF/LTF sequence may be generated based on a pre-configured STF generation sequence/LTF generation sequence.

Additionally, the step of constructing/generating the PPDU may include a step of generating a data field (i.e., MPDU) transmitted through a specific RU.

The transmitting STA may transmit the constructed/generated PPDU to the receiving STA (S115).

Specifically, the transmitting STA may perform at least one of cyclic shift diversity (CSD), spatial mapping, inverse discrete Fourier transform (IDFT)/inverse fast Fourier transform (IFFT) operations, and guard interval (GI) insertion operations.

The receiving STA may decode the PPDU and acquire control information related to the tone plan (or RU) (S120).

Specifically, the receiving STA may decode the L-SIG and EHT-SIG of the PPDU based on the L-STF/LTF, and acquire the information included in the L-SIG and EHT-SIG fields. Information for various tone plans (i.e., RUs) of the present disclosure may be included in the EHT-SIG (EHT-SIG-A/B/C, etc.), and the receiving STA may acquire information for the tone plan (i.e., RU) through the EHT-SIG.

The receiving STA may decode the remaining portion of the PPDU based on the acquired information for the tone plan (i.e., RU) (S125). For example, the receiving STA may decode the STF/LTF fields of the PPDU based on the information for the tone plan (i.e., RU). In addition, the receiving STA may decode the data field of the PPDU based on the information for the tone plan (i.e., RU) and acquire the MPDU included in the data field.

The receiving STA may also perform a processing operation of delivering the decoded data to a higher layer (e.g., MAC layer). In addition, when signal generation is instructed from the higher layer to the PHY layer in response to the data delivered to the higher layer, the receiving STA may perform subsequent operations.

Embodiments described above are that elements and features of the present disclosure are combined in a predetermined form. Each element or feature should be considered to be optional unless otherwise explicitly mentioned. Each element or feature may be implemented in a form that it is not combined with other element or feature. In addition, an embodiment of the present disclosure may include combining a part of elements and/or features. An order of operations described in embodiments of the present disclosure may be changed. Some elements or features of one embodiment may be included in other embodiment or may be substituted with a corresponding element or a feature of other embodiment. It is clear that an embodiment may include combining claims without an explicit dependency relationship in claims or may be included as a new claim by amendment after application.

It is clear to a person skilled in the pertinent art that the present disclosure may be implemented in other specific form in a scope not going beyond an essential feature of the present disclosure. Accordingly, the above-described detailed description should not be restrictively construed in every aspect and should be considered to be illustrative. A scope of the present disclosure should be determined by reasonable construction of an attached claim and all changes within an equivalent scope of the present disclosure are included in a scope of the present disclosure.

A scope of the present disclosure includes software or machine-executable commands (e.g., an operating system, an application, a firmware, a program, etc.) which execute an operation according to a method of various embodiments in a device or a computer and a non-transitory computer-readable medium that such a software or a command, etc. are stored and are executable in a device or a computer. A command which may be used to program a processing system performing a feature described in the present disclosure may be stored in a storage medium or a computer-readable storage medium and a feature described in the present disclosure may be implemented by using a computer program product including such a storage medium. A storage medium may include a high-speed random-access memory such as DRAM, SRAM, DDR RAM or other random-access solid state memory device, but it is not limited thereto, and it may include a nonvolatile memory such as one or more magnetic disk storage devices, optical disk storage devices, flash memory devices or other nonvolatile solid state storage devices. A memory optionally includes one or more storage devices positioned remotely from processor(s). A memory or alternatively, nonvolatile memory device(s) in a memory include a non-transitory computer-readable storage medium. A feature described in the present disclosure may be stored in any one of machine-readable mediums to control a hardware of a processing system and may be integrated into a software and/or a firmware which allows a processing system to interact with other mechanism utilizing a result from an embodiment of the present disclosure. Such a software or a firmware may include an application code, a device driver, an operating system and an execution environment/container, but it is not limited thereto.

### [Industrial Applicability]

The method proposed in this disclosure has been described with a focus on examples applied to IEEE 802.11-based systems, but can be applied to various wireless LANs or wireless communication systems in addition to IEEE 802.11-based systems.

## Claims

1. A method comprising:
generating, by a first station (STA), a physical layer protocol data unit (PPDU); and
transmitting, by the first STA to a second STA, the PPDU within a first bandwidth,
wherein a preamble field of the PPDU is transmitted to the second STA within at least one second bandwidth of the first bandwidth, and
wherein a predefined resource unit corresponding to a distributed resource unit (DRU) assigned to the PPDU and the at least one second bandwidth overlap.

2. The method of claim 1, wherein:
the preamble field comprises at least one of a legacy (L)-short training field (STF) field, an L-long training field (LTF) field, an L-signal (SIG) field, a repeated L-SIG (RL-SIG) field, a universal (U)-SIG field, or an ultra-high reliability (UHR)-SIG field.

3. The method of claim 2, wherein:
based on the PPDU being a trigger-based (TB) PPDU solicited by a trigger frame, the preamble field includes the L-STF field, the L-LTF field, the RL-SIG field, and the U-SIG field, and
based on the PPDU being a non-TB PPDU, the preamble field includes the L-STF field, the L-LTF field, the RL-SIG field, the U-SIG field, and the UHR-SIG field.

4. The method of claim 1, wherein:
a size of each of the at least one second bandwidth is 20 MHz, and
the preamble field of the PPDU is transmitted over all of the at least one second bandwidth.

5. The method of claim 1, wherein:
a size of each of the at least one second bandwidth is 20 MHz, and
the preamble field of the PPDU is transmitted in a specific second bandwidth among the at least one second bandwidth.

6. The method of claim 5, wherein:
based on a primary (P) 20 MHz being included in the at least one second bandwidth, the specific second bandwidth is the P 20 MHz, and if
based on the at least one second bandwidth not including the P20 MHz and including a secondary(S) 20 MHz, the specific second bandwidth is the S 20 MHz.

7. The method of claim 6, wherein:
based on the P20 MHz and S20 MHz being not included in the at least one second bandwidth but a first 20 MH of S40 MHz being included in the at least one second bandwidth, the specific second bandwidth is the first 20 MHz;
based on the P20 MHz, S20 MHz, and S40 MHz being not included in the at least one second bandwidth but a second 20 MH of S80 MHz being included in the at least one second bandwidth, the specific second bandwidth is the second 20 MHz; and
based on the P20 MHz, S20 MHz, S40 MHz, and S80 MHz being not included in the at least one second bandwidth but a third 20 MH of S160 MHz being included in the at least one second bandwidth, the specific second bandwidth is the third 20 MHz.

8. The method of claim 7, wherein:
the first 20 MHz is a 20 MHz having a lowest or highest bandwidth among two 20 MHzs included in the S40 MHz,
the second 20 MHz is a 20 MHz having a lowest or highest bandwidth among four 20 MHzs included in the S80 MHz, and
the third 20 MHz is a 20 MHz having a lowest or highest bandwidth among eight 20 MHzs included in the S160 MHz.

9. The method of claim 5, wherein:
a specific second bandwidth is arbitrarily selected by the first STA among the at least one second bandwidth.

10. The method of claim 1, wherein:
a UHR-STF field and UHR-LTF field of the PPDU, respectively, are transmitted based on a subcarrier that overlaps with the DRU.

11. The method of claim 1, wherein:
the first STA is a non-access point (AP) STA, and
the second STA is an AP.

12. A first station (STA) comprising:
at least one transceiver; and
at least one processor connected to the at least one transceiver,
wherein the at least one processor is configured to:
generate a physical layer protocol data unit (PPDU); and
transmit, through the at least one transceiver, the PPDU within a first bandwidth,
wherein a preamble field of the PPDU is transmitted to the second STA within at least one second bandwidth of the first bandwidth, and
wherein a predefined resource unit corresponding to a distributed resource unit (DRU) assigned to the PPDU and the at least one second bandwidth overlap.

13. A method comprising:
receiving, from a first station (STA) to a second STA, a physical layer protocol data unit (PPDU) within a first bandwidth; and
decoding, by the second STA, the PPDU,
wherein a preamble field of the PPDU is received from the first STA within at least one second bandwidth of the first bandwidth, and
wherein a predefined resource unit corresponding to a distributed resource unit (DRU) assigned to the PPDU and the at least one second bandwidth overlap.

14. A second station (STA) comprising:
at least one transceiver; and
at least one processor connected to the at least one transceiver,
wherein the at least one processor is configured to:
receive, through the at least one transceiver, a physical layer protocol data unit (PPDU) within a first bandwidth; and
decode the PPDU,
wherein a preamble field of the PPDU is received from the first STA within at least one second bandwidth of the first bandwidth, and
wherein a predefined resource unit corresponding to a distributed resource unit (DRU) assigned to the PPDU and the at least one second bandwidth overlap.

15. A processing device configured to control a first station (STA) in a wireless local area network (WLAN) system, the processing device comprising:
at least one processor; and
at least one computer memory operatively connected to the one or more processors and storing instructions that, when executed by the at least one processor, perform a method according to any one of claims 1 to 11.
